# EUROPEAN PATENT SPECIFICATION

(11) **EP 4 049 855 B1**
(45) Date of publication and mention of the grant of the patent: **29.05.2024**
(21) Application number: 20878235.9
(22) Date of filing: 23.09.2020
(51) Int. Cl.: B60C 1/00, D07B 1/06, B60C 9/00, B60C 9/20, B60C 11/00

(54) **TIRE**
REIFEN
PNEUMATIQUE

(30) Priority: 25.10.2019 JP 2019194502
(43) Date of publication of application: 31.08.2022
(73) Proprietor: Sumitomo Rubber Industries, Ltd., Kobe-shi, Hyogo 651-0072 (JP)
(72) Inventor: NAKAJIMA Hiroki, Kobe-shi, Hyogo 651-0072 (JP); YAMAGUCHI Eiji, Kobe-shi, Hyogo 651-0072 (JP)
(74) Representative: TBK
(86) International application number: PCT/JP2020/035739
(87) International publication number: WO 2021/079673

(56) References cited:
- JP-A- 2001 080 313
- JP-A- 2008 156 418
- JP-A- 2013 122 038
- JP-A- 2014 095 017
- JP-A- 2017 048 351
- JP-A- 2017 178 994

## Description

### [FIELD OF THE INVENTION]

The present invention relates to a tire provided with a belt layer in a tread portion.

### [BACKGROUND OF THE INVENTION]

Conventionally, tires using belt cords made of steel single wires each having a flat cross-sectional shape in the belt layer have been known. For example, JP 4467107 B2 (application no. JP 2001-080313 A) has proposed a pneumatic tire provided with a belt layer in which belt cords made of steel single wires each having a specific long diameter and a specific short diameter are covered with a cord topping rubber having a specific complex elastic modulus.

Further, JP 2008-156418 A discloses a rubber composition for coating a steel cord which comprises 100 pts.wt. of a rubber component, 4-15 pts.wt. of silica, 4-15 pts.wt. of a phenol resin and/or a modified phenol resin, 0.5-10 pts.wt. of a partial condensate of hexamethylolmelamine pentamethyl ether and/or a partial condensate of hexamethoxymethylolmelamine and 0.1-1.0 pt.wt. of an organic thiosulfate compound and/or a citraconimide compound. JP 2013-122038 A discloses a rubber composition for tire cord covering which includes an isoprenoid rubber, phenol resin and/or alkylphenol resin, and a partial condensate of hexamethoxymethylolmelamine and/or a partial condensate of hexamethylolmelaminepentamethylether. JP 2014-095017 A discloses a rubber composition for a steel cord coating, containing a rubber component, a carbon black having a nitrogen adsorption specific surface area of 20 to 130 m/g, organic cobalt and a specified compound. JP 2017-048351 A discloses a pneumatic tire containing a reinforcement layer constituted by arranging a steel cord, a cord rubber coating the steel cord. JP 2017-178994 A discloses a passenger car tire that has an under tread produced using a rubber composition which contains a rubber component, carbon black having a nitrogen adsorption specific surface area of 20-130 m/g, a C5 petroleum resin, and a specified compound.

### [SUMMARY OF THE INVENTION]

### [Problems to be solved by the Invention]

The tire in JP 4467107 B2 is expected to improve fuel efficiency, noise performance, and ride comfort performance in a good balance by weight reduction. However, in recent years, the demand for the fuel efficiency has become higher and higher, and further improvements are expected in the tire of JP 4467107 B2.

The present invention has been made in view of the above, and a primary obj ect thereof is to provide a tire provided with a belt layer capable of improving the fuel efficiency while maintaining good noise performance, ride comfort performance, and durability performance.

### [Means for Solving the Problems]

The present invention is a tire as defined in claim 1.

In the tire of the present invention, the tread portion includes a tread rubber forming a tread ground contacting surface, and the tread rubber has a complex elastic modulus ET* at 70 degrees Celsius in the range of from 4.5 to 10.0 MPa and a loss tangent tanδ at 70 degrees Celsius in the range of from 0.08 to 0.15.

In the tire of the present invention, it is preferred that a ratio (ET*/ES*) of the complex elastic modulus ET* of the tread rubber to the complex elastic modulus ES* of the topping rubber is 1.3 or less.

In the tire of the present invention, it is preferred that the loss tangent tanδ at 70 degrees Celsius of the topping rubber is in the range of from 0.04 to 0.09.

In the tire of the present invention, it is preferred that the loss tangent tanδ at 70 degrees Celsius of the topping rubber is in the range of from 0.04 to 0.06.

In the tire of the present invention, it is preferred that each of the steel single wires has a ratio (LD/SD) in the range of from 1.05 to 1.35 between a long diameter LD and a short diameter SD of the cross-sectional shape thereof and the long diameter LD in the range of from 0.30 to 0.50 mm.

In the tire of the present invention, it is preferred that each of the steel single wires is formed wavy in at least one of a long diameter direction and a short diameter direction of the cross-sectional shape thereof, each of the steel single wires has a wave pitch (P) in the range of from 3.0 to 10.0 mm, and each of the steel single wires has a wave height (H) in the range of from 0.05 to 0.15 mm.

In the tire of the present invention, it is preferred that the topping rubber contains a cobalt element and a ratio (c/L) between a concentration (c) (ppm) of the cobalt element and an outer peripheral length (L) (mm) of each of the steel single wires in the cross-sectional shape thereof is in the range of from 350 to 1000 ppm/mm.

### [Effects of the Invention]

In the tire of the present invention, the belt layer includes the belt ply made of the steel single wires each having a flat cross-sectional shape and the topping rubber covering the belt cords, and the topping rubber has the complex elastic modulus ES* at 70 degrees Celsius in the range of from 8.0 to 20.0 MPa and the loss tangent tanδ at 70 degrees Celsius in the range of from 0.04 to 0.14.

The topping rubber configured as such suppresses heat generation during running, therefore, it is possible that the fuel efficiency of the tire is improved without affecting the noise performance, the ride comfort performance, and the durability performance. Thereby, it is possible that the tire of the present invention improves the fuel efficiency while maintaining good noise performance, good ride comfort performance, and good durability performance.

### [BRIEF DESCRIPTION OF THE DRAWINGS]

FIG. 1 is a cross-sectional view showing a tire according to an embodiment of the present invention.
FIG. 2 is a cross-sectional view of a belt ply.
FIG. 3 is a schematic diagram of a single steel wire.

### [DETAILED DESCRIPTION OF THE INVENTION]

An embodiment of the present invention will now be described in conjunction with accompanying drawings.

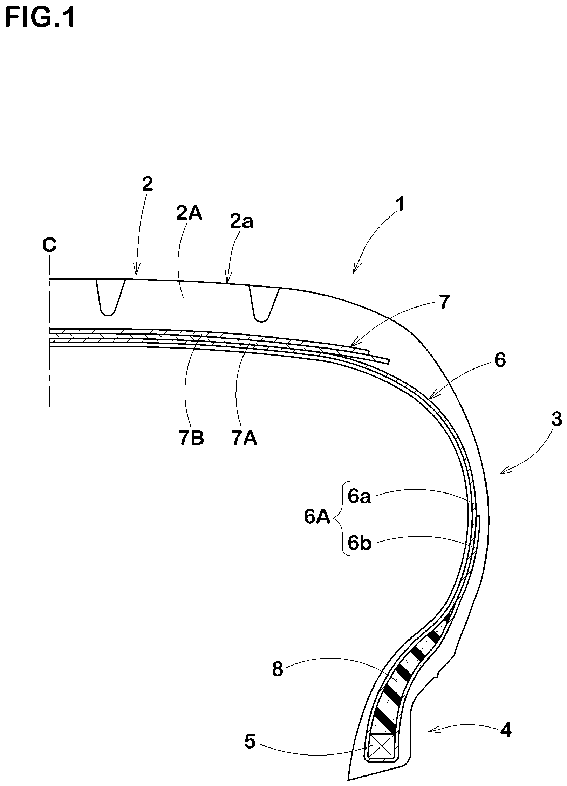

FIG. 1 is a tire meridian section of a tire 1 passing through a rotational axis of the tire 1 in a standard state. The tire 1 of the present embodiment is suitable for use as a rubber pneumatic tire to be mounted on passenger cars and the like. It should be noted that the tire 1 is not limited to rubber pneumatic tires for passenger cars, but can be applied to a variety of tires, such as heavy-duty pneumatic tires, plastic pneumatic tires, and non-pneumatic tires not filled with pressurized air therein, for example.

Here, in the case where the tire 1 is a rubber pneumatic tire, the "standard state" is a state in which the tire 1 is mounted on a standard rim, inflated to a standard inner pressure, and loaded with no tire load. In the following, unless otherwise mentioned, the dimensions of various parts of the tire 1 are the values measured in this standard state.

The "standard rim" is a wheel rim specified for the concerned tire by a standard included in a standardization system on which the tire is based, for example, the "normal wheel rim" in JATMA, "Design Rim" in TRA, and "Measuring Rim" in ETRTO.

The "standard inner pressure" is air pressure specified for the concerned tire by a standard included in a standardization system on which the tire is based, for example, the maximum air pressure in JATMA, maximum value listed in the "TIRE LOAD LIMITS AT VARIOUS COLD INFLATION PRESSURES" table in TRA, and "INFLATION PRESSURE" in ETRTO.

As shown in FIG. 1, the tire 1 of the present embodiment includes a tread portion 2 extending annularly, a pair of sidewall portions 3 extending on both sides of the tread portion 2, and a pair of bead portions 4 extending in connection with the sidewall portions 3. The tire 1 of the present embodiment has a toroidal carcass 6 extending between bead cores 5 of the pair of the bead portions 4, and a belt layer 7 arranged radially outside the carcass 6 and inside the tread portion 2.

The carcass 6 includes at least one carcass ply, in the present embodiment one carcass ply 6A. The carcass ply 6A includes carcass cords (not shown) arranged at an angle of 75 to 90 degrees with respect to a tire circumferential direction, for example. Organic fiber cords such as aromatic polyamide or rayon and the like can be employed as the carcass cords, for example.

The carcass ply 6A includes a main body portion (6a) extending between the pair of the bead cores 5, and turned-up portions (6b) connected to the main body portion (6a) and each turned up from the inside to the outside in a tire axial direction around a respective one of the bead cores 5, for example. A bead apex rubber 8 extending outward in a tire radial direction from each of the bead cores 5 is disposed between the main body portion (6a) and each of the turned-up portions (6b) of the carcass ply 6A, for example.

The belt layer 7 includes at least one belt ply, in the present embodiment two belt plies 7A and 7B. The two belt plies 7A and 7B include a first belt ply 7A arranged radially inside and a second belt ply 7B arranged radially outside the first belt ply 7A, for example. The belt layer 7 configured a such increases rigidity of the tread portion 2, therefore, it is possible that the durability performance of the tire 1 is improved.

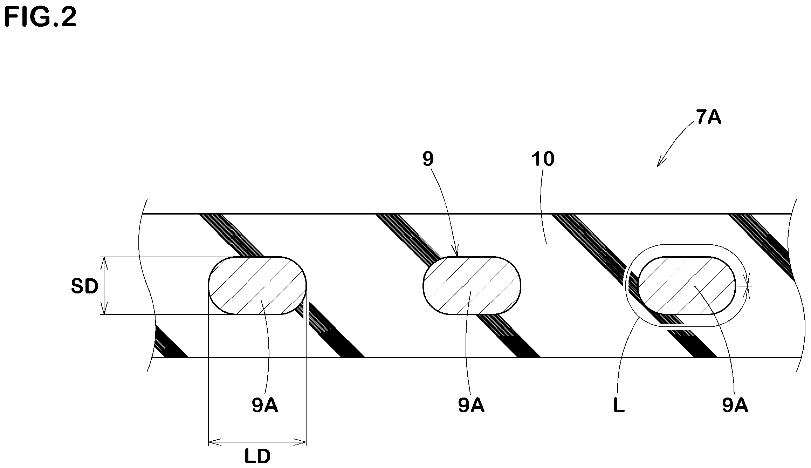

FIG. 2 is an enlarged cross-sectional view of the belt ply 7A. In FIG. 2, the belt ply 7A is shown as an example, but the same structure can be used for the belt ply 7B as well. As shown in FIG. 2, at least one of the belt plies 7A and 7B of the present embodiment includes belt cords 9 formed by steel single wires 9A having a flat cross-sectional shape and a topping rubber 10 covering the belt cords 9.

It is preferred that the topping rubber 10 has a complex elastic modulus ES* at 70 degrees Celsius in the range of from 8.0 to 20.0 MPa, and a loss tangent tanδ at 70 degrees Celsius in the range of from 0.04 to 0.16. The topping rubber 10 configured as such suppresses heat generation during running, therefore, it is possible that the fuel efficiency of the tire 1 is improved without affecting the noise performance, the ride comfort performance, and the durability performance. Thereby, it is possible that the tire 1 of the present embodiment improves the fuel efficiency while maintaining good noise performance, good ride comfort performance, and good durability performance.

Here, the complex elastic modulus ES* at 70°C and the loss tangent tanδ of the topping rubber 10 were the values measured in accordance with Japanese Industrial Standard JIS-K6394 by using a dynamic viscoelasticity measurement device (EPLEXOR series) manufactured by GABO QUALIMETER Testanlagen GmbH under the following conditions.
initial strain: 10%
amplitude of dynamic strain: ±1%
frequency: 10Hz
deformation mode: tensile
measurement temperature: 70°C

It is more preferred that the complex elastic modulus ES* of the topping rubber 10 at 70°C is in the range of from 14.0 to 20.0 MPa. The topping rubber 10 configured as such suppresses the deformation of the belt layer 7, therefore, it is possible that the durability performance of the tire 1 is improved. On the other hand, when the topping rubber 10 has the complex elastic modulus ES* in the range of from 8.0 to 14.0 MPa at 70 degrees Celsius, it is possible that the noise performance and the ride comfort performance are improved.

The loss tangent tan δ at 70°C of the topping rubber 10 is more preferably in the range of from 0.04 to 0.14, even more preferably from 0.04 to 0.09, and most preferably from 0.04 to 0.06. The topping rubber 10 configured as such further suppresses the heat generation during running, therefore, it is possible that the fuel efficiency of the tire 1 is further improved without affecting the noise performance, the ride comfort performance, and the durability performance.

It is preferred that the topping rubber 10 has a ratio (tanδ/ES*) of the loss tangent tanδ and the complex elastic modulus ES* (MPa) in the range of from 0.002 to 0.017. The topping rubber 10 configured as such suppresses the heat generation during running, therefore, it is possible that the fuel efficiency of the tire 1 is improved without affecting the noise performance, the ride comfort performance, and the durability performance. Thereby, it is possible that the tire 1 of the present embodiment improves the fuel efficiency while maintaining good noise performance, good ride comfort performance, and good durability performance.

Examples of the rubber components used in the topping rubber 10 include, for example, natural rubber (NR), isoprene-based rubber such as isoprene rubber (IR), and diene-based rubber such as butadiene rubber (BR), styrene-butadiene rubber (SBR), styrene-isoprene-butadiene rubber (SIBR), chloroprene rubber (CR), acrylonitrile butadiene rubber (NBR) and the like. For the topping rubber 10, natural rubber (NR) or the combination of natural rubber (NR) and isoprene rubber (IR) is preferred from the point of view of the durability performance.

It is preferred that the topping rubber 10 contains a cobalt element in the rubber. Examples of compounds containing a cobalt element include cobalt salts of organic acids such as cobalt stearate, cobalt naphthenate, cobalt neodecanoate, and cobalt boron tri-neodecanoate, and the like, for example. In the topping rubber 10 configured as such, cross-linking with belt cords 9 is promoted by the cobalt elements during vulcanization molding, therefore, it is possible that the adhesion of the topping rubber 10 with the belt cords 9 is improved.

It is preferred that the topping rubber 10 contains carbon black. From the point of view of the durability performance, the content of the carbon black is preferably 10 mass parts or more, more preferably 40 mass parts or more, and even more preferably 50 mass parts or more per 100 mass parts of rubber component. On the other hand, from the point of view of heat generating property, the upper limit of the carbon black content is preferably 100 mass parts or less, and more preferably 70 mass parts or less.

Although not particularly limited, examples of the carbon black include furnace black (furnace carbon black) such as SAF, ISAF, HAF, MAF, FEF, SRF, GPF, APF, FF, CF, SCF, and ECF; acetylene black (acetylene carbon black); thermal black (thermal carbon black) such as FT and MT; channel black (channel carbon black) such as EPC, MPC, and CC; graphite, and the like. One of these may be used alone, or two or more may be used in combination.

The nitrogen adsorption specific surface area (N₂SA) of the carbon black is more than 30 m²/g and less than 250 m²/g, for example. The amount of dibutyl phthalate (DBP) absorption of carbon black is, for example, more than 50 ml/100 g and less than 250 ml/100 g, for example. It should be noted that the nitrogen adsorption specific surface area of the carbon black is measured according to ASTM D4820-93, and the DBP absorption is measured according to ASTM D2414-93.

Although not particularly limited, examples of specific carbon black are N134, N110, N220, N234, N219, N339, N330, N326, N351, N550, N762, and the like. Commercial products can be used, for example, from Asahi Carbon Corporation, Cabot Japan Corporation, Tokai Carbon Corporation, Mitsubishi Chemical Corporation, Lion Corporation, Nippon Steel Carbon Corporation, Columbia Carbon Corporation, and others. One of these may be used alone, or two or more may be used in combination.

It is preferred that the topping rubber 10 also contains silica, if necessary. The BET specific surface area of the silica is preferably more than 140 m²/g, and more preferably more than 160 m²/g from the point of view of obtaining good durability performance. On the other hand, from the point of view of obtaining good fuel efficiency, the upper limit of the BET specific surface area of the silica is preferably less than 250 m²/g, and more preferably less than 220 m²/g. It should be noted that the BET specific surface area is the value of N2SA measured by the BET method according to ASTM D3037-93.

When silica is not used in combination with a silane coupling agent, the content of the silica with respect to 100 mass parts of rubber component is preferably 3 mass parts or more, and more preferably 5 mass parts or more. On the other hand, for the upper limit of the silica content when not used together with a silane coupling agent, 25 mass parts or less is preferable, and 15 mass parts or less is more preferable. Further, it is preferred that the upper limit of the silica content is 25 mass parts or more when used in combination with a silane coupling agent. On the other hand, for the upper limit of the silica content when used in combination with a silane coupling agent, 50 mass parts or less is preferable, 40 mass parts or less is more preferable, and 30 mass parts or less is even more preferable.

Examples of the silica include fumed silica (anhydrous silica), wet silica (hydrous silica), and the like, for example. As for the silica, among these, wet silica is preferred because of its high silanol group content.

Products available from Degussa-Hüls AG, Rhodia, Tosoh Silica Corporation, Solvay Japan Corporation, Tokuyama Corporation, and so on can be used as the silica, for example.

As mentioned above, a silane coupling agent can also be used in conjunction with silica. Although not particularly limited, examples of the silane coupling agent include bis(3-triethoxysilylpropyl)tetrasulfide, bis(2-triethoxysilylethyl)tetrasulfide, Bis(4-triethoxysilylbutyl)tetrasulfide, Bis(3-trimethoxysilylpropyl)tetrasulfide, Bis(2-trimethoxysilylethyl)tetrasulfide, Bis(2-triethoxysilylethyl)trisulfide, Bis(4-trimethoxysilylbutyl)trisulfide, Bis(3-triethoxysilylpropyl)disulfide, Bis(2-triethoxysilylethyl)disulfide, Bis(4-triethoxysilylbutyl)disulfide, Bis(3-triethoxysilylpropyl)disulfide, Bis(2-trimethoxysilylethyl) disulfide, Bis(4-triethoxysilylbutyl) disulfide, 3-Trimethoxysilylpropyl-N,N-dimethylthiocarbamoyl tetrasulfide, 2-Triethoxysilylethyl-N,N-dimethylthiocarbamoyl tetrasulfide, sulfides such as 3-Triethoxysilylpropyl methacrylate monosulfide and the like, 3-mercaptopropyltrimethoxysilane, 2-mercaptoethyltriethoxysilane, mercaptic compounds such as NXT and NXT-Z available from Momentive, Inc., vinyl triethoxysilane, vinyl compounds such as vinyltrimethoxysilane and the like, 3-aminopropyltriethoxysilane, amino compounds such as 3-aminopropyltrimethoxysilane and the like, γ-glycidoxypropyltriethoxysilane, glycidoxy compounds such as γ-glycidoxypropyltrimethoxysilane and the like, 3-Nitropropyltrimethoxysilane, nitro compounds such as 3-nitropropyltriethoxysilane and the like, 3-chloropropyltrimethoxysilane, chloro compounds such as 3-chloropropyltriethoxysilane and the like, for example. One of these may be used alone, or two or more may be used in combination.

As for the silane coupling agent, products from Degussa-Hüls AG, Momentive, Inc., Shin-Etsu Silicone, Tokyo Chemical Industry Co., Ltd., AZmax co., Toray Dow Coming, and others can be used, for example.

The content of the silane coupling agent is more than 3 mass parts and less than 15 mass parts per 100 mass parts of silica, for example.

In addition to carbon black and silica, the topping rubber 10 may contain additional fillers commonly used in the tire industry, such as calcium carbonate, talc, alumina, clay, aluminum hydroxide, mica, and the like, for example. The amount of these contents is, for example, more than 0.1 mass part and less than 20.0 mass parts per 100 mass parts of the rubber component.

It is preferred that the topping rubber 10 contains a curable resin component such as modified resorcinol resin, modified phenol resin, and the like. Thereby, it is possible that the adhesion to steel cords is improved without significantly degrading the heat generating property and elongation at rupture.

The content of the curable resin component is preferably 1 mass part or more, and more preferably 2 mass parts or more with respect to 100 mass parts of the rubber component, for example. On the other hand, for the upper limit of the content of the curable resin component, 10 mass parts or less is preferable, and 8 mass parts or less is more preferable.

Examples of specific modified resorcinol resin include, for example, Sumicanol 620 (modified resorcinol resin) available from Taoka Chemical Industry, and examples of modified phenolic resins include, for example, PR12686 (cashew oil modified phenolic resin) available from Sumitomo Bakelite Co., Ltd.

It is preferred that modified resorcinol resin also contains methylene donors as curing agents when using the modified resorcinol resin. Examples of methylene donors include hexamethylenetetramine (HMT), hexamethoxymethylol melamine (HMMM), hexamethylol melamine pentamethyl ether (HMMPME), and the like, for example, and it is preferred to include 5 mass parts or more, for example, about 15 mass parts, per 100 mass parts of curable resin component.

As a specific methylene donor, Sumikanol 507 available from Taoka Chemical Co., Ltd., for example.

From the point of view of processability (imparting adhesiveness), it is preferred that the topping rubber 10 contains softening agents such as oil or resin components as necessary. The total content of these is preferably more than 0.5 mass parts and less than 10 mass parts per 100 mass parts of rubber component.

Examples of the oil include mineral oil (commonly referred to as process oil), vegetable oil, or mixtures thereof, for example. As mineral oil (process oil), paraffinic process oil, aromatic process oil, naphthenic process oil, and the like can be used, for example. Examples of vegetable oil include castor oil, cottonseed oil, linseed oil, rape seed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, paulownia oil, and the like. One of these may be used alone, or two or more may be used in combination.

As for the specific process oil (mineral oil), products from Idemitsu Kosan, Sankyo Petrochemical, Japan Energy, Orisoy, H&R, Hokoku Corporation, Showa Shell Sekiyu, Fuji Kosan Company, and the like can be used, for example.

The resin component may be solid or liquid at room temperature, and examples of the specific resin component include, for example, rosin-based resins, styrene-based resins, coumarone-based resins, terpene-based resins, C5 resins, C9 resins, C5C9 resins, acrylic resins, and the like, and two or more of these may be used together in combination. The content of the resin component is preferably more than 2 mass parts and less than 45 mass parts, more preferably less than 30 mass parts per 100 mass parts of the rubber component.

Rosin-based resins are mainly composed of rosin acid, which is obtained by processing pine resin. These rosin-based resins (rosins) can be classified according to whether they are modified or not, and can be classified into unmodified rosin (unmodified rosin) and rosin modified products (rosin derivatives). Examples of the unmodified rosin include tall rosin (also known as tall oil rosin), gum rosin, wood rosin, disproportionated rosin, polymerized rosin, hydrogenated rosin, other chemically modified rosins, and the like. Rosin modified products are modified versions of unmodified rosin, including rosin esters, unsaturated carboxylic acid modified rosin, unsaturated carboxylic acid modified rosin esters, amide compounds of rosin, amine salts of rosin, and the like.

Styrene-based resins are polymers that use styrene-based monomer as the constituent monomer, such as polymers polymerized with styrene monomer as the main component (50 mass% or more). Specific examples of the styrene-based resins include single polymers in which styrene-based monomer is polymerized alone, copolymers in which two or more styrene monomers are copolymerized, as well as copolymers of styrene monomers and other monomers that can be copolymerized with styrene monomers. Specific examples of styrene-based monomer include styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p- chlorostyrene, and the like.

Examples of other monomers include acrylonitriles, such as acrylonitrile and methacrylonitrile; acrylics; unsaturated carboxylic acids, such as methacrylic acid; unsaturated carboxylic esters, such as methyl acrylate and methyl methacrylate; dienes, such as chloroprene and butadiene isoprene; olefins, such as 1-butene and 1-pentene; α,β-unsaturated carboxylic acids, such as maleic anhydride, or acid anhydrides thereof; and others.

Among the coumarone resins, coumarone indene resin is preferred. Coumaron-indene resin is a resin that contains coumarone and indene as the monomer components that make up the backbone (main chain) of the resin. In addition to coumarone and indene, examples of the monomer components in the backbone include styrene, α-methylstyrene, methylindene, vinyltoluene, and the like.

The content of coumaronindane resin is more than 1.0 mass part and less than 50.0 mass parts per 100 mass parts of rubber component, for example.

The hydroxyl group value (OH value) of coumaronindane resin is more than 15 mg KOH/g and less than 150 mg KOH/g, for example. It should be noted that the OH value is the amount of potassium hydroxide required to neutralize the acetic acid bonded to the hydroxyl group when acetylating 1g of resin, expressed in milligrams and measured by potentiometric titration method (JIS K 0070:1992).

The softening point of coumaronindane resin is, for example, above 30°C and below 160°C. It should be noted that the softening point is the temperature at which the sphere drops when the softening point specified in JIS K 6220-1:2001 is measured by using a cyclic softening point measuring device.

Examples of the terpene-based resin include polyterpenes, terpene phenols, and aromatic modified terpene resins. Polyterpene is a resin obtained by polymerizing terpene compounds and their hydrogenated products. Terpene compounds are hydrocarbons and their oxygen-containing derivatives represented by the composition of (C5H8)n, and are the compounds with a basic skeleton of terpenes classified as monoterpene (C10H16), sesquiterpene (C15H24), diterpene (C20H32), and so on. Examples of the terpene compounds include α-pinene, β-pinene, dipentene, limonene, myrcene, alloocimene, ocimene, α-feranthrene, α-terpinene, γ-terpinene, terpinolene, 1,8-cineole, 1,4-cineole, α-terpineol, β-terpineol, γ-terpineol, and the like, for example.

Examples of polyterpenes include terpene resins such as α-pinene resin, β-pinene resin, limonene resin, dipentene resin, β-pinene/limonene resin, and the like, which are made from the terpene compounds described above, as well as hydrogenated terpene resins, which are hydrogenated to the terpene resins. Examples of the terpene phenol include a resin obtained by copolymerizing a terpene compound and a phenolic compound, and a resin obtained by hydrogenating the copolymerized resin. Specific examples of the terpene phenol include a terpene compound, a phenol-based compound, and a resin obtained by condensing formalin. It should be noted that examples of the phenol-based compound include phenol, bisphenol A, cresol, xylenol and the like, for example. Examples of the aromatic-modified terpene resin include a resin obtained by modifying a terpene resin with an aromatic compound, and a resin obtained by hydrogenating the above modified resin. It should be noted that the aromatic compound is not particularly limited as long as it is a compound having an aromatic ring, and examples of the aromatic compound include, for example, phenol compounds such as phenol, alkylphenol, alkoxyphenol, unsaturated hydrocarbon group-containing phenol, and the like; naphthol compounds such as naphthol, alkylnaphthol, alkoxynaphthol, and naphthol containing unsaturated hydrocarbon groups, and the like: styrene derivatives such as styrene, alkyl styrene, alkoxystyrene, styrenes containing unsaturated hydrocarbon groups; kumaron, inden and the like.

The "C5 resin" refers to a resin obtained by polymerizing a C5 fraction. Examples of the C5 fraction include petroleum fractions having 4 to 5 carbon atoms such as cyclopentadiene, pentene, pentadiene, isoprene, and the like. As the C5 petroleum resin, a dicyclopentadiene resin (DCPD resin) is preferably used.

The "C9 resin" refers to a resin obtained by polymerizing C9 fractions, and may be hydrogenated or modified. Examples of the C9 fractions include petroleum fractions having 8 to 10 carbon atoms such as vinyltoluene, alkylstyrene, indene, methyl indene, and the like. As a specific example, kumaron indene resin, kumaron resin, indene resin, and aromatic vinyl-based resin are preferably used, for example. As for aromatic vinyl resins, a monopolymer of α-methylstyrene or styrene or a copolymer of α-methylstyrene and styrene is preferred, and a copolymer of α-methylstyrene and styrene is more preferred because it is economical, easy to process, and has excellent heat generating property. As for aromatic vinyl resins, those commercially available from Kraton, Eastman Chemical, and so on can be used, for example.

The term "C5C9 resin" refers to resins obtained by copolymerization of C5 and C9 fractions, which may be hydrogenated or modified. Examples of the C5 fraction and the C9 fraction include the above-mentioned petroleum fraction. As for the C5C9 resins, those commercially available from Tosoh Corporation, LUHUA, and so on can be used, for example.

The acrylic resins are not particularly limited, but for example, a solvent-free acrylic resin can be used.

Examples of the solvent-free acrylic resins include a (meth) acrylic resin synthesized by a high-temperature continuous polymerization method (high-temperature continuous lump polymerization method, i.e., the method described in US Patent No. 4414370; JPS59-6207; JPH5-58005; JPH1-313522; US Patent No. 5010166; Toagosei Annual Report TREND2000, No. 3, p42-45; and the like) without using polymerization initiators, chain transfer agents, organic solvents, and the like, as auxiliary raw materials as much as possible. It should be noted that, in the present invention, (meth) acrylic means methacrylic and acrylic.

Examples of the monomer component constituting the acrylic resins include (meth) acrylic acid and (meth) acrylic acid derivatives such as (meth) acrylic acid ester (alkyl ester, aryl ester, aralkyl ester, and the like), (meth) acrylamide, (meth) acrylamide derivatives, and the like, for example.

Further, as the monomer components constituting the acrylic resins, aromatic vinyls such as styrene, α-methylstyrene, vinyltoluene, vinylnaphthalene, divinylbenzene, trivinylbenzene, divinylnaphthalene and the like may be used together with (meth) acrylic acid and (meth) acrylic acid derivatives.

The acrylic resins can be resins composed solely of (meth) acrylic components or resins containing components other than (meth) acrylic components. Further, the acrylic resins may have hydroxyl groups, carboxyl groups, silanol groups, and the like.

Examples of the resin components include products available from Maruzen Petrochemical Co., Ltd., Sumitomo Bakelite Co., Ltd., Yasuhara Chemical Co., Ltd., Tosoh Corporation, Rutgers Chemicals GmbH, BASF SE, Arizona Chemical Company, LLC, Nitto Chemical Co., Ltd., Nippon Shokubai Co., Ltd., JX Energy Corporation, Arakawa Chemical Industries, Ltd., Taoka Chemical Co., Ltd., and the like, for example.

It is preferred that the topping rubber 10 contains an anti-aging agent. The content of the anti-aging agent is more than 1 mass part and less than 10 mass parts with respect to 100 parts by mass of the rubber component, for example.

Examples of the antiaging agent include, for example, naphthylamine-based anti-aging agents such as phenyl-α-naphthylamine, and the like; diphenylamine-based anti-aging agents such as octylated diphenylamine, 4,4'-bis (α, α'-dimethylbenzyl) diphenylamine, and the like; p-phenylenediamine-based anti-aging agents such as N-Isopropyl-N'-phenyl-p-phenylenediamine, N-(1,3-dimethylbutyl)-N'-phenyl-p-phenylenediamine, N,N'-di-2-naphthyl-p-phenylenediamine, and the like; quinoline-based anti-aging agents such as a polymer of 2,2,4-trimethyl-1,2-dihydroquinolin, and the like; monophenolic anti-aging agents such as 2,6-di-t-butyl-4-methylphenol, styrenated phenol, and the like; bis, tris, polyphenolic anti-aging agents such as tetrakis-[methylene-3-(3',5'-di-t-butyl-4'-hydroxyphenyl) propionate] methane, and the like. One of these may be used alone, or two or more may be used in combination.

As the anti-aging agent, for example, products available from Seiko Chemical Co., Ltd., Sumitomo Chemical Co., Ltd., Ouchi Shinko Chemical Industrial Co., Ltd., FlexSys Inc., and the like can be used.

The topping rubber 10 may contain stearic acid. The content of the stearic acid is more than 0.5 parts by mass and less than 10.0 parts by mass with respect to 100 parts by mass of the rubber component, for example. As the stearic acid, conventionally known products can be used, and for example, products such as NOF Corporation, Kao Corporation, Fujifilm Wako Pure Chemical Corporation, Chiba Fatty Acid Co., Ltd., and the like can be used.

The topping rubber may contain zinc oxide. The content of the zinc oxide is, for example, more than 0.5 parts by mass and less than 15 parts by mass with respect to 100 parts by mass of the rubber component. As the zinc oxide, conventionally known products can be used, for example, products available from Mitsui Mining and Smelting Co., Ltd., Toho Zinc Co., Ltd., Hakusui Tech Co., Ltd., Seido Chemical Industry Co., Ltd., Sakai Chemical Industry Co., Ltd., and the like can be used.

It is preferred that the topping rubber 10 contains a cross-linking agent such as sulfur. The content of the cross-linking agent is more than 0.1 part by mass and less than 10.0 parts by mass with respect to 100 parts by mass of the rubber component, for example.

Examples of the sulfur include powdered sulfur, precipitated sulfur, colloidal sulfur, insoluble sulfur, highly dispersible sulfur, and soluble sulfur, which are generally used in the rubber industry. One of these may be used alone, or two or more may be used in combination.

It should be noted that, as the sulfur, products available from Tsurumi Chemical Industry Co., Ltd., Karuizawa Sulfur Co., Ltd., Shikoku Chemicals Corporation, FlexSys Inc., Nippon Kanryu Industry Co., Ltd., Hosoi Chemical Industry Co., Ltd., and the like can be used, for example.

Examples of the cross-linking agent other than sulfur include vulcanizing agents containing sulfur atoms such as Tackirol V-200 available from Taoka Chemical Co., Ltd., Duralink HTS (1,6-hexamethylene-sodium dithiosulfate dihydrate) available from FlexSys Inc., KA9188 (1,6-bis (N, N'-dibenzylthiocarbamoyldithio) hexane) available from Lanxess AG, and the like; and organic peroxides such as dicumyl peroxide and the like, for example.

It is preferred that the topping rubber 10 contains a vulcanization accelerator. The content of the vulcanization accelerator is more than 0.3 parts by mass and less than 10.0 parts by mass with respect to 100 parts by mass of the rubber component, for example.

Examples of the vulcanization accelerator include thiazole-based vulcanization accelerators such as 2-mercaptobenzothiazole, di-2-benzothiazolyl disulfide, N-cyclohexyl-2-benzothiadylsulfenamide, and the like; thiuram-based vulcanization accelerators such as tetramethylthiuram disulfide (TMTD), tetrabenzylthiuram disulfide (TBzTD), tetrakis (2-ethylhexyl) thiuram disulfide (TOT-N), and the like; sulfenamide-based vulcanization accelerators such as N-cyclohexyl-2-benzothiazolesulfenamide, N-t-butyl-2-benzothiazolylsulfenamide, N-oxyethylene-2-benzothiazolesulfenamide, N-oxyethylene-2-benzothiazolesulfenamide, N, N'-diisopropyl-2-benzothiazolesulfenamide, and the like; guanidine-based vulcanization accelerators such as diphenylguanidine, dioltotrilguanidine, orthotrilbiguanidine, and the like. One of these may be used alone, or two or more may be used in combination.

In addition to these components, the rubber composition for belts used in the topping rubber 10 may further contain additives commonly used in the tire industry, such as fatty acid metal salts, carboxylic acid metal salts, organic peroxides, and the like, for example. The content of these additives is more than 0.1 part by mass and less than 200 parts by mass with respect to 100 parts by mass of the rubber component, for example.

It is preferred that a ratio (c/L) between a concentration (c) (ppm) of the cobalt element described above and an outer peripheral length (L) (mm) of a cross-sectional shape of each of the steel single wires 9A is in the range of from 350 to 1000 ppm/mm. Since the ratio (c/L) is 350 ppm/mm or more, it is possible that the adhesiveness with the belt cords 9 is improved, therefore, it is possible that the durability performance of the tire 1 is improved. Since the ratio (c/L) is 1000 ppm/mm or less, the adhesive layer with belt cords 9 is suppressed from becoming brittle, therefore, delamination is suppressed even if repeated deformation due to rotation of the tire 1 acts, thereby, it is possible that the durability performance of the tire 1 is improved. From this point of view, it is more preferred that the ratio (c/L) is 400 to 740 ppm/mm.

The belt cords 9 in the present embodiment are arranged in the topping rubber 10 so that the short diameter direction of the steel single wires 9A is oriented along a thickness direction of the belt plies 7A and 7B. It is possible that the belt cords 9 configured as such maintain the rigidity of the tread portion 2 while reducing the thickness of the belt plies 7A and 7B, therefore, the belt cords 9 are helpful for achieving both the fuel efficiency and the durability performance due to the reduced weight of the tire 1.

It is preferred that each of the steel single wires 9A has a ratio (LD/SD) between a long diameter LD and a short diameter SD of the cross-sectional shape thereof in the range of from 1.05 to 1.35. If the ratio (LD/SD) of the steel single wires 9A is smaller than 1.05, the rigidity of the belt layer 7 becomes excessively high, therefore, the noise performance and the ride comfort performance of the tire 1 may not be improved. If the ratio (LD / SD) of the steel single wires 9A is greater than 1.35, the strength of the steel single wires 9A is decreased, which may affect the durability performance of the tire 1.

It is preferred that each of the steel single wires 9A has the long diameter LD of 0.30 to 0.50 mm in the cross-sectional shape thereof. If the long diameter LD of each of the steel single wires 9A is smaller than 0.30 mm, the strength of the steel single wires 9A is decreased, which may affect the durability performance of the tire 1. If the long diameter LD of each of the steel single wires 9A is larger than 0.50 mm, the rigidity of the belt layer 7 becomes excessively high, which may affect the noise performance and the ride comfort performance of the tire 1.

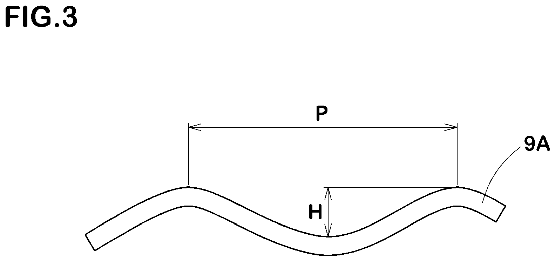

FIG. 3 is a schematic diagram of one of the steel single wires 9A as viewed from the long diameter direction. As shown in FIG. 3, each of the steel single wires 9A is formed wavy in at least one of, in the present embodiment both of, the long diameter direction and the short diameter direction in the cross-sectional shape. The steel single wires 9A configured as such moderate the rigidity of the belt layer 7, therefore, it is possible that the noise performance and the ride comfort performance of the tire 1 are improved.

It is preferred that each of the steel single wires 9A has a wave pitch (P) in the range of from 3.0 to 10.0 mm. Here, the wave pitch (P) is a length of one pitch in a longitudinal direction of the wavy steel single wire 9A. If the wave pitch (P) of the steel single wires 9A is smaller than 3.0 mm, the improvement effect of the tire 1 in the noise performance and the ride comfort performance may be small. If the wave pitch (P) of the steel single wires 9A is larger than 10.0 mm, the strength of the steel single wires 9A is decreased, which may affect the durability performance of the tire 1.

The wave pitch (P) of the steel single wires 9A of the present embodiment is substantially constant along the longitudinal direction of the steel single wires 9A. The wave pitch (P) of the steel single wires 9A may vary in length along the longitudinal direction of the steel single wires 9A, for example.

It is preferred that each of the steel single wires 9A has a wave height (H) in the range of from 0.05 to 0.15 mm. If the wave height (H) of the steel single wires 9A is smaller than 0.05 mm, the effect of improving the noise performance and the ride comfort performance of the tire 1 may be small. If the wave height (H) of the steel single wires 9A is greater than 0.15 mm, the strength of the steel single wires 9A is decreased, which may affect the durability performance of the tire 1.

As shown in FIG. 1, the tread portion 2 of the present invention includes a tread rubber 2A forming a tread ground contacting surface (2a). The tread rubber 2A has a complex elastic modulus ET* at 70°C of 4.5 to 10.0 MPa and a loss tangent tan δ at 70°C of 0.08 to 0.15.

Here, the complex elastic modulus ET* at 70 °C and the loss tangent tan δ of the tread rubber 2A, as well as the topping rubber 10 described above, are the values measured by using a dynamic viscoelasticity measurement device (EPLEXOR series) manufactured by GABO QUALIMETER Testanlagen GmbH in accordance with Japanese Industrial Standard JIS-K6394 under the following conditions.
initial strain: 10%
amplitude of dynamic strain: ±1%
frequency: 10Hz
deformation mode: tensile
measurement temperature: 70°C

It is possible that the tread rubber 2A configured as such suppresses heat generation during running and further improve the fuel efficiency of the tire 1 without affecting the noise performance, the ride comfort performance, and the durability performance. Therefore, it is possible that the tire 1 of the present embodiment further improve the fuel efficiency while maintaining good noise performance, good ride comfort performance, and good durability performance.

It is preferred that a ratio (ET*/ES*) between the complex elastic modulus ET* of the tread rubber 2A and the complex elastic modulus ES* of the topping rubber 10 is 1.3 or less. The tread portion 2 configured as such helps to improve the noise performance, the ride comfort performance, the durability performance, and the fuel efficiency of the tire 1 in a good balance.

Examples of the rubber components used in the tread rubber 2A include, for example, natural rubber (NR), isoprene-based rubber such as isoprene rubber (IR), and diene-based rubber such as butadiene rubber (BR), styrene-butadiene rubber (SBR), styrene-isoprene-butadiene rubber (SIBR), chloroprene rubber (CR), acrylonitrile butadiene rubber (NBR), butyl rubber (IIR) and the like. For the tread rubber 2A, the combination of natural rubber (NR), butadiene rubber (BR), and styrene-butadiene rubber (SBR) is preferred from the point of view of the durability performance.

The content of SBR in 100 mass parts of the rubber component used in the tread rubber 2A is preferably more than 5 mass parts, and more preferably more than 50 mass parts, for example. On the other hand, the upper limit of the SBR content is preferably 100 mass parts or less, more preferably 65 mass parts or less, and even more preferably 60 mass parts or less. By making the content within this range, it is made easier to obtain the effects of the present embodiment. The weight average molecular weight of SBR is more than 100,000 and less than 2 million, for example. The styrene content of SBR is preferably more than 5 mass%, more preferably more than 10 mass%, and even more preferably more than 20 mass%. On the other hand, from the point of view of the heat generating property and the durability performance, the upper limit of styrene content of SBR is preferably less than 50 mass%, more preferably less than 40 mass%, and even more preferably less than 35 mass%. The vinyl bond amount (1,2-bonded butadiene unit amount) of SBR is more than 5 mass% and less than 70 mass%, for example. It should be noted that the structural identification of SBR (measurement of styrene content and vinyl bond content) can be performed by using JNM-ECA series equipment available from JEOL Ltd., for example.

The SBR is not limited to any particular type of SBR. For example, emulsion polymerized styrene-butadiene rubber (E-SBR) and solution polymerized styrene-butadiene rubber (S-SBR) and the like can be used. The SBR can be either non-modified SBR or modified SBR.

The modified SBR can be any SBR having functional groups that interact with fillers such as silica, and the like, and the examples include, for example, end-modified SBR (end-modified SBR with functional groups at the end), in which at least one end of the SBR is modified with a compound (denaturant) having functional groups, and main-chain modified SBR having a functional group on the main chain, and main-chain end-modified SBR with functional groups on both the main chain and the end (e.g., main-chain end-modified SBR with functional groups on the main chain and at least one end modified with a denaturant), and end-modified SBR modified (coupled) with a multifunctional compound having two or more epoxy groups in the molecule to introduce hydroxyl groups and epoxy groups.

Examples of such a functional group include amino group, amide group, silyl group, alkoxysilyl group, isocyanate group, imino group, imidazole group, urea group, ether group, carbonyl group, oxycarbonyl group, mercapto group, sulfide group, disulfide group, sulfonyl group, sulfinyl group, thiocarbonyl group, ammonium group, imide group, hydrazo group, azo group, diazo group, carboxyl group, nitrile group, pyridyl group, alkoxy group, hydroxyl group, oxy group, epoxy group, and so on. It should be noted that these functional groups may have substituents.

Further, as the modified SBR, for example, SBR modified by a compound (denaturant) represented by the following chemical formula 1 can be used.

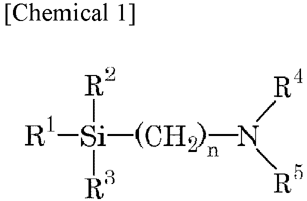

It should be noted that R1, R2, and R3 in chemical formula 1 represent the same or different alkyl groups, alkoxy groups, silyloxy groups, acetal groups, carboxyl groups (-COOH), mercapto groups (-SH), or their derivatives. R4 and R5 represent the same or different hydrogen atom or alkyl group. R4 and R5 may be bonded together to form a ring structure with a nitrogen atom. "n" represents an integer.

As a modified SBR modified by a compound represented by this chemical formula (denaturant), SBR in which the polymerization end (active end) of solution-polymerized styrene-butadiene rubber (S-SBR) is modified by a compound represented by this chemical formula (such as the modified SBR described in Japanese Unexamined Patent Application Publication No. 2010-111753) can be used.

As R1, R2, and R3, an alkoxy group (preferably an alkoxy group with 1 to 8 carbons, more preferably an alkoxy group with 1 to 4 carbons) is suitable. As R4 and R5, an alkyl group (preferably an alkyl group with 1-3 carbon atoms) is suitable. "n" is preferably 1 to 5, more preferably 2 to 4, and even more preferably 3. Further, in the case where R4 and R5 are bonded together to form a ring structure with nitrogen atoms, a 4-memberd to 8-membered ring is preferred. It should be noted that an alkoxy group also includes a cycloalkoxy group (a cyclohexyloxy group, and so on) and an aryloxy group (a phenoxy group, a benzyloxy group, and so on).

Specific denaturants include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, 3-diethylaminopropyltriethoxysilane, and the like. One of these may be used alone, or two or more of these may be used in combination.

Further, as the modified SBR, modified SBR modified by the following compounds (denaturants) can also be used. Examples of the denaturants include, for example, the followings; polyglycidyl ethers of polyhydric alcohols such as ethylene glycol diglycidyl ether, glycerin triglycidyl ether, trimethylolethane triglycidyl ether, trimethylolpropane triglycidyl ether; polyglycidyl ethers of aromatic compounds with two or more phenolic groups, such as diglycidylated bisphenol A; polyepoxy compounds such as 1,4-diglycidylbenzene, 1,3,5-triglycidylbenzene, and polyepoxidized liquid polybutadiene; tertiary amines containing epoxy groups, such as 4,4'-diglycidyl-diphenylmethylamine and 4,4'-diglycidyl-dibenzylmethylamine; diglycidylamino compounds such as diglycidyl aniline, N, N'-diglycidyl-4-glycidyloxyaniline, diglycidyl orthotoluidine, tetraglycidyl metaxylylenediamine, tetraglycidylaminodiphenylmethane, tetraglycidyl-p-phenylenediamine, diglycidylaminomethylcyclohexane, tetraglycidyl-1,3-bisaminomethylcyclohexane; amino group-containing acid chlorides such as bis-(1-methylpropyl) carbamate chloride, 4-morpholine carbonyl chloride, 1-pyrrolidine carbonyl chloride, N,N-dimethylcarbamate chloride, N,N-diethylcarbamate chloride; epoxy group-containing silane compounds such as 1,3-bis-(glycidyloxypropyl)-tetramethyldisiloxane, (3-glycidyloxypropyl)-pentamethyldisiloxane; sulfide group-containing silane compounds such as (trimethylsilyl) [3- (trimethoxysilyl) propyl] sulfide, (trimethylsilyl) [3- (triethoxysilyl) propyl] sulfide, (trimethylsilyl) [3- (tripropoxysilyl) propyl] sulfide, (trimethylsilyl) [3 -(tributoxysilyl) propyl] sulfide, (trimethylsilyl) [3-(methyldimethoxysilyl) propyl] sulfide, (trimethylsilyl) [3- (methyldiethoxysilyl) propyl] sulfide, (trimethylsilyl) [3- (methylpropoxysilyl) propyl] sulfide, (trimethylsilyl) [3-(methyldibutoxysilyl) propyl] sulfide; N-substituted aziridine compounds such as ethyleneimine and propyleneimine; alkoxysilanes such as methyltriethoxysilane, N,N-bis(trimethylsilyl)-3-aminopropyltrimethoxysilane, N,N-bis(trimethylsilyl)-3-aminopropyltriethoxysilane, N,N-bis(trimethylsilyl) aminoethyltrimethoxysilane, N,N-bis(trimethylsilyl) aminoethyltriethoxysilane; (thio)benzophenone compounds with amino groups and/or substituted amino groups such as 4-N,N-dimethylaminobenzophenone, 4-N,N-di-t-butylaminobenzophenone, 4-N,N-diphenylaminobenzophenone, 4,4'-bis (dimethylamino) benzophenone, 4,4'-bis (diethylamino) benzophenone, 4,4'-bis (diphenylamino) benzophenone, N,N,N',N'-bis-(tetraethylamino) benzophenone; benzaldehyde compounds with amino groups and/or substituted amino groups, such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, N-methyl-5-methyl-2-pyrrolidone; N-substituted piperidones, such as N-methyl-2-piperidone, N-vinyl-2-piperidone, and N-phenyl-2-piperidone; N-substituted lactams, such as N-methyl-ε-caprolactam, N-phenyl-ε-caprolactam, N-methyl-ω-laurylactam, N-vinyl-ω-laurylactam, N-methyl-β-propiolactam, N-phenyl-β-propiolactam; as well as N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethylurea, 1,3-dimethylethylene urea, 1,3-divinylethylene urea, 1,3-diethyl-2-imidazolidinone, 1-Methyl-3-ethyl-2-imidazolidinone, 4-N, N-dimethylaminoacetophen, 4-N, N-diethylaminoacetophenone, 1,3-Bis (diphenylamino)-2-propanone, 1,7-Bis (Methylethylamino)-4-heptanone. It should be noted that the denaturation by these compounds (denaturants) can be carried out by known methods.

As the SBR, for example, SBR manufactured and sold by Sumitomo Chemical Co., Ltd., JSR Corporation, Asahi Kasei Corporation, Zeon Corporation, and so on can be used. It should be noted that one type of SBR may be used alone, or two or more types may be used in combination.

The content of isoprene rubber in 100 mass parts of the rubber component (total content) is preferably 5 mass parts or more, more preferably 25 mass parts or more, and even more preferably 35 mass parts or more from the point of view of obtaining good low heat generation property during high-speed running and good durability performance. On the other hand, the upper limit of the isoprene rubber content is not particularly limited, but from the point of view of wet grip performance, it is preferably 100 mass parts or less, more preferably 80 mass parts or less, and even more preferably 50 mass parts or less. Examples of the isoprene-based rubber include natural rubber (NR), isoprene rubber (IR), reformed NR, modified NR, modified IR and the like.

As the NR, those commonly used in the tire industry such as SIR20, RSS #3, TSR20, and the like can be used, for example. The IR is not particularly limited, and those commonly used in the tire industry such as IR2200 and the like can be used, for example. Examples of the reformed NR include deproteinized natural rubber (DPNR), high-purity natural rubber (UPNR), and the like, examples of the modified NR include epoxidized natural rubber (ENR), hydrogenated natural rubber (HNR), grafted natural rubber, and the like, and examples of the modified IR include epoxidized isoprene rubber, hydrogenated isoprene rubber, grafted isoprene rubber, and the like. One of these may be used alone, or two or more of these may be used in combination.

The rubber composition used for the tread rubber 2A may further contain BR if necessary. In this case, the content of BR in 100 mass parts of the rubber component is preferably more than 5 mass parts, for example, from the point of view of wear resistance. On the other hand, the upper limit of the BR content is not particularly limited, but it is preferably 100 mass parts or less, more preferably 30 mass parts or less, and even more preferably 20 mass parts or less. The weight average molecular weight of the BR is more than 100,000 and less than 2 million, for example. The amount of vinyl bonds in the BR is more than 1 mass% and less than 30 mass%, for example. The cis amount of the BR is more than 1 mass% and less than 98 mass%, for example. The trans amount of the BR is more than 1 mass% and less than 60 mass%, for example.

The BR is not particularly limited, and BR with high cis content (cis content of 90% or more), BR with low cis content, BR containing syndiotactic polybutadiene crystals, and the like can be used. The BR may be either a non-modified BR or a modified BR, and examples of the modified BR include a modified BR into which the above-mentioned functional groups have been introduced. One of these may be used alone, or two or more of these may be used in combination. It should be noted that the cis content can be measured by infrared absorption spectrometry.

As the BR, for example, products available from Ube Industries, Ltd., JSR Corporation, Asahi Kasei Corporation, and Zeon Corporation, and so on can be used.

Further, the rubber composition of the tread rubber 2A may also contain, as other rubber components, rubbers (polymers) commonly used in the manufacture of tires such as nitrile rubber (NBR) and the like.

In the present embodiment, it is preferred that the rubber composition of the tread rubber 2A contains fillers. Specific examples of the filler include, for example, silica, carbon black, calcium carbonate, talc, alumina, clay, aluminum hydroxide, mica, and the like, and among these, silica and carbon black can be preferably used as the reinforcing agent. It should be noted that, when silica is used, it is preferred that silica is used in combination with a silane coupling agent.

It is preferred that the rubber composition of the tread rubber 2A contains silica. The BET specific surface area of silica is preferably more than 140 m²/g, more preferably more than 160 m²/g, from the point of view of obtaining good durability performance. On the other hand, from the point of view of obtaining good rolling resistance during high-speed running, it is preferably less than 250 m²/g, and more preferably less than 220 m²/g. It should be noted that the BET specific surface area is the value of N₂SA measured by the BET method according to ASTM D3037-93.

When silica is used as a filler-reinforcing agent, the content of silica with respect to 100 mass parts of the rubber component is preferably more than 35 mass parts, and more preferably more than 40 mass parts from the point of view of obtaining good durability performance. On the other hand, from the point of view of obtaining good rolling resistance, the upper limit of the silica content is preferably less than 70 mass parts, more preferably less than 65 mass parts, and even more preferably less than 60 mass parts.

Examples of silica include dry silica (anhydrous silica) and wet silica (hydrous silica), for example. As for silica, among these, wet silica is preferred because of its high silanol group content.

As the silica, products available from Degussa-Hüls AG, Rhodia, Tosoh Silica Corporation, Solvay Japan, Ltd., Tokuyama Corporation, and the like can be used, for example.

It is preferred that the rubber composition of the tread rubber 2A contains a silane coupling agent along with silica. The silane coupling agent is not particularly limited and examples thereof include, for example, sulfide-based silane coupling agents such as bis (3-triethoxysilylpropyl) tetrasulfide, bis (2-triethoxysilylethyl) tetrasulfide, bis (4-triethoxysilylbutyl) tetrasulfide, bis (3-trimethoxysilylpropyl) tetrasulfide, bis (2-trimethoxysilylethyl) tetrasulfide, bis (2-triethoxysilylethyl) trisulfide, bis (4-trimethoxysilylbutyl) trisulfide, bis (3-triethoxysilylpropyl) disulfide, bis (2-triethoxysilylethyl) disulfide, bis (4-triethoxysilylbutyl) disulfide, bis (3-trimethoxysilylpropyl) disulfide, bis (2-trimethoxysilylethyl) disulfide, bis (4-trimethoxysilylbutyl) disulfide, 3-trimethoxysilylpropyl-N,N-dimethylthiocarbamoyltetrasulfide, 2-triethoxysilylethyl-N,N-dimethylthiocarbamoyltetrasulfide, 3-triethoxysilylpropylmethacrylate monosulfide; mercapto-based silane coupling agents such as 3-mercaptopropyltrimethoxysilane, 2-mercaptoethyltriethoxysilane, NXT and NXT-Z available from Momentive, Inc.; vinyl-based silane coupling agents such as vinyltriethoxysilane, vinyltrimethoxysilane, and the like; amino-based silane coupling agents such as 3-aminopropyltriethoxysilane, 3-aminopropyltrimethoxysilane, and the like; glysidoxy-based silane coupling agents such as γ-glycidoxypropyltriethoxysilane, γ-glycidoxypropyltrimethoxysilane, and the like; nitro-based silane coupling agents such as 3-nitropropyltrimethoxysilane, 3-nitropropyltriethoxysilane, and the like; chloro-based coupling agents such as 3-chloropropyltrimethoxysilane, 3-chloropropyltriethoxysilane, and the like. One of these may be used alone, or two or more of these may be used in combination.

As the silane coupling agents, products available from Degussa-Hüls AG, Momentive, Inc., Shin-Etsu Silicone, Tokyo Chemical Industry Co., Ltd., AZmax.co, Toray Dow Coming, and others can be used, for example.

The silane coupling agent content is, for example, more than 3 parts by mass and less than 25 parts by mass per 100 parts by mass of the silica.

It is preferred that the rubber composition of the tread rubber 2A contains carbon black. The content of the carbon black is, for example, more than 1 mass part and less than 200 mass parts per 100 mass parts of the rubber component.

Although not particularly limited, examples of the carbon black include furnace black (furnace carbon black) such as SAF, ISAF, HAF, MAF, FEF, SRF, GPF, APF, FF, CF, SCF, and ECF; acetylene black (acetylene carbon black); thermal black (thermal carbon black) such as FT and MT; channel black (channel carbon black) such as EPC, MPC, and CC; graphite, and the like. One of these may be used alone, or two or more may be used in combination.

The nitrogen adsorption specific surface area (N₂SA) of the carbon black is more than 30 m²/g and less than 250 m²/g, for example. The amount of dibutyl phthalate (DBP) absorption of carbon black is, for example, more than 50 ml/100 g and less than 250 ml/100 g, for example. It should be noted that the nitrogen adsorption specific surface area of the carbon black is measured according to ASTM D4820-93, and the DBP absorption is measured according to ASTM D2414-93.

Although not particularly limited, examples of specific carbon black are N134, N110, N220, N234, N219, N339, N330, N326, N351, N550, N762, and the like. Commercial products can be used, for example, from Asahi Carbon Corporation, Cabot Japan Corporation, Tokai Carbon Corporation, Mitsubishi Chemical Corporation, Lion Corporation, Nippon Steel Carbon Corporation, Columbia Carbon Corporation, and others. One of these may be used alone, or two or more may be used in combination.

In addition to carbon black and silica, the rubber composition of the tread rubber 2A may contain additional fillers commonly used in the tire industry, such as calcium carbonate, talc, alumina, clay, aluminum hydroxide, mica, and the like, for example. The amount of these contents is, for example, more than 0.1 mass part and less than 20.0 mass parts per 100 mass parts of the rubber component.

The rubber composition of the tread rubber 2A may contain oil (including extender oil) or liquid rubber as a softener. It is preferred that the total content of these is more than 5 parts by mass per 100 parts by mass of the rubber component. The upper limit of the total content is preferably less than 70 parts by mass, more preferably less than 50 parts by mass, and even more preferably less than 30 parts by mass. It should be noted that the oil content includes the amount of oil contained in the rubber (oil extended rubber).

Examples of the oil include mineral oil (commonly referred to as process oil), vegetable oil, or mixtures thereof, for example. As mineral oil (process oil), paraffinic process oil, aromatic process oil, naphthenic process oil, and the like can be used, for example. Examples of vegetable oil include castor oil, cottonseed oil, linseed oil, rape seed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, paulownia oil, and the like. One of these may be used alone, or two or more may be used in combination.

As for the specific process oil (mineral oil), products from Idemitsu Kosan, Sankyo Petrochemical, Japan Energy, Orisoy, H&R, Hokoku Corporation, Showa Shell Sekiyu, Fuji Kosan Company, and the like can be used, for example.

The liquid rubber mentioned as a softener is a polymer that is in a liquid state at room temperature (25°C) and is composed of the same monomers as solid rubber. Examples of the liquid rubber include farnesene-based polymers, liquid diene-based polymers, hydrogenated additives thereof, and the like.

Examples of the liquid diene-based polymers include liquid styrene-butadiene copolymer (liquid SBR), liquid butadiene polymer (liquid BR), liquid isoprene polymer (liquid IR), liquid styrene isoprene copolymer (liquid SIR), and the like.

The liquid diene-based polymers have a weight average molecular weight (Mw) in polystyrene equivalent measured by gel permeation chromatography (GPC) of more than 1.0 × 10³ and less than 2.0 × 10⁵, for example. It should be noted that the Mw of the liquid diene polymer in the present document is the polystyrene equivalent measured by gel permeation chromatography (GPC).

As the liquid rubber, products available from Kuraray Co., Ltd., Clay Valley, and the like can be used, for example.

Further, it is preferred that the rubber composition of the tread rubber 2A contains a resin component, if necessary. The resin component may be solid or liquid at room temperature, and examples of the specific resin component include, for example, styrene-based resins, coumarone-based resins, terpene-based resins, C5 resins, C9 resins, C5C9 resins, acrylic resins, and the like, and two or more of these may be used together in combination. The content of the resin component is preferably more than 2 mass parts and less than 45 mass parts, more preferably less than 30 mass parts per 100 mass parts of the rubber component.

Styrene-based resins are polymers that use styrene-based monomer as the constituent monomer, such as polymers polymerized with styrene monomer as the main component (50 mass% or more). Specific examples of the styrene-based resins include single polymers in which styrene-based monomer is polymerized alone, copolymers in which two or more styrene monomers are copolymerized, as well as copolymers of styrene monomers and other monomers that can be copolymerized with styrene monomers. Specific examples of styrene-based monomer include styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p- chlorostyrene, and the like.

Examples of other monomers include acrylonitriles, such as acrylonitrile and methacrylonitrile; acrylics; unsaturated carboxylic acids, such as methacrylic acid; unsaturated carboxylic esters, such as methyl acrylate and methyl methacrylate; dienes, such as chloroprene and butadiene isoprene; olefins, such as 1-butene and 1-pentene; α,β-unsaturated carboxylic acids, such as maleic anhydride, or acid anhydrides thereof; and others.

Among the coumarone resins, coumarone indene resin is preferred. Coumaron-indene resin is a resin that contains coumarone and indene as the monomer components that make up the backbone (main chain) of the resin. In addition to coumarone and indene, examples of the monomer components in the backbone include styrene, α-methylstyrene, methylindene, vinyltoluene, and the like.

The content of coumaronindane resin is more than 1.0 mass part and less than 50.0 mass parts per 100 mass parts of rubber component, for example.

The hydroxyl group value (OH value) of coumaronindane resin is more than 15 mg KOH/g and less than 150 mg KOH/g, for example. It should be noted that the OH value is the amount of potassium hydroxide required to neutralize the acetic acid bonded to the hydroxyl group when acetylating 1g of resin, expressed in milligrams and measured by potentiometric titration method (JIS K 0070:1992).

The softening point of coumaronindane resin is, for example, above 30°C and below 160°C. It should be noted that the softening point is the temperature at which the sphere drops when the softening point specified in JIS K 6220-1:2001 is measured by using a cyclic softening point measuring device.

Examples of the terpene-based resin include polyterpenes, terpene phenols, and aromatic modified terpene resins. Polyterpene is a resin obtained by polymerizing terpene compounds and their hydrogenated products. Terpene compounds are hydrocarbons and their oxygen-containing derivatives represented by the composition of (C₅H₈)n, and are the compounds with a basic skeleton of terpenes classified as monoterpene (C₁₀H₁₆), sesquiterpene (C₁₅H₂₄), diterpene (C₂₀H₃₂), and so on. Examples of the terpene compounds include α-pinene, β-pinene, dipentene, limonene, myrcene, alloocimene, ocimene, α-feranthrene, α-terpinene, γ-terpinene, terpinolene, 1,8-cineole, 1,4-cineole, α-terpineol, β-terpineol, γ-terpineol, and the like, for example.

Examples of polyterpenes include terpene resins such as α-pinene resin, β-pinene resin, limonene resin, dipentene resin, β-pinene/limonene resin, and the like, which are made from the terpene compounds described above, as well as hydrogenated terpene resins, which are hydrogenated to the terpene resins. Examples of the terpene phenol include a resin obtained by copolymerizing a terpene compound and a phenolic compound, and a resin obtained by hydrogenating the copolymerized resin. Specific examples of the terpene phenol include a terpene compound, a phenol-based compound, and a resin obtained by condensing formalin. It should be noted that examples of the phenol-based compound include phenol, bisphenol A, cresol, xylenol and the like, for example. Examples of the aromatic-modified terpene resin include a resin obtained by modifying a terpene resin with an aromatic compound, and a resin obtained by hydrogenating the above modified resin. It should be noted that the aromatic compound is not particularly limited as long as it is a compound having an aromatic ring, and examples of the aromatic compound include, for example, phenol compounds such as phenol, alkylphenol, alkoxyphenol, unsaturated hydrocarbon group-containing phenol, and the like; naphthol compounds such as naphthol, alkylnaphthol, alkoxynaphthol, and naphthol containing unsaturated hydrocarbon groups, and the like: styrene derivatives such as styrene, alkyl styrene, alkoxystyrene, styrenes containing unsaturated hydrocarbon groups; kumaron, inden and the like.

The "C5 resin" refers to a resin obtained by polymerizing a C5 fraction. Examples of the C5 fraction include petroleum fractions having 4 to 5 carbon atoms such as cyclopentadiene, pentene, pentadiene, isoprene, and the like. As the C5 petroleum resin, a dicyclopentadiene resin (DCPD resin) is preferably used.

The "C9 resin" refers to a resin obtained by polymerizing C9 fractions, and may be hydrogenated or modified. Examples of the C9 fractions include petroleum fractions having 8 to 10 carbon atoms such as vinyltoluene, alkylstyrene, indene, methyl indene, and the like. As a specific example, kumaron indene resin, kumaron resin, indene resin, and aromatic vinyl-based resin are preferably used, for example. As for aromatic vinyl resins, a monopolymer of α-methylstyrene or styrene or a copolymer of α-methylstyrene and styrene is preferred, and a copolymer of α-methylstyrene and styrene is more preferred because it is economical, easy to process, and has excellent heat generating property. As for aromatic vinyl resins, those commercially available from Kraton, Eastman Chemical, and so on can be used, for example.

The term "C5C9 resin" refers to resins obtained by copolymerization of C5 and C9 fractions, which may be hydrogenated or modified. Examples of the C5 fraction and the C9 fraction include the above-mentioned petroleum fraction. As for the C5C9 resins, those commercially available from Tosoh Corporation, LUHUA, and so on can be used, for example.

The acrylic resins are not particularly limited, but for example, a solvent-free acrylic resin can be used.

Examples of the solvent-free acrylic resins include a (meth) acrylic resin synthesized by a high-temperature continuous polymerization method (high-temperature continuous lump polymerization method, i.e., the method described in US Patent No. 4414370; JPS59-6207; JPH5-58005; JPH1-313522; US Patent No. 5010166; Toagosei Annual Report TREND2000, No. 3, p42-45; and the like) without using polymerization initiators, chain transfer agents, organic solvents, and the like, as auxiliary raw materials as much as possible. It should be noted that, in the present invention, (meth) acrylic means methacrylic and acrylic.

Examples of the monomer component constituting the acrylic resins include (meth) acrylic acid and (meth) acrylic acid derivatives such as (meth) acrylic acid ester (alkyl ester, aryl ester, aralkyl ester, and the like), (meth) acrylamide, (meth) acrylamide derivatives, and the like, for example.

Further, as the monomer components constituting the acrylic resins, aromatic vinyls such as styrene, α-methylstyrene, vinyltoluene, vinylnaphthalene, divinylbenzene, trivinylbenzene, divinylnaphthalene and the like may be used together with (meth) acrylic acid and (meth) acrylic acid derivatives.

The acrylic resins can be resins composed solely of (meth) acrylic components or resins containing components other than (meth) acrylic components. Further, the acrylic resins may have hydroxyl groups, carboxyl groups, silanol groups, and the like.

Examples of the resin components include products available from Maruzen Petrochemical Co., Ltd., Sumitomo Bakelite Co., Ltd., Yasuhara Chemical Co., Ltd., Tosoh Corporation, Rutgers Chemicals GmbH, BASF SE, Arizona Chemical Company, LLC, Nitto Chemical Co., Ltd., Nippon Shokubai Co., Ltd., JX Energy Corporation, Arakawa Chemical Industries, Ltd., Taoka Chemical Co., Ltd., and the like, for example.

It is preferred that the rubber composition of the tread rubber 2A contains an anti-aging agent. The content of the anti-aging agent is more than 1 mass part and less than 10 mass parts with respect to 100 parts by mass of the rubber component, for example.

Examples of the antiaging agent include, for example, naphthylamine-based anti-aging agents such as phenyl-α-naphthylamine, and the like; diphenylamine-based anti-aging agents such as octylated diphenylamine, 4,4'-bis (α, α'-dimethylbenzyl) diphenylamine, and the like; p-phenylenediamine-based anti-aging agents such as N-Isopropyl-N'-phenyl-p-phenylenediamine, N-(1,3-dimethylbutyl)-N'-phenyl-p-phenylenediamine, N,N'-di-2-naphthyl-p-phenylenediamine, and the like; quinoline-based anti-aging agents such as a polymer of 2,2,4-trimethyl-1,2-dihydroquinolin, and the like; monophenolic anti-aging agents such as 2,6-di-t-butyl-4-methylphenol, styrenated phenol, and the like; bis, tris, polyphenolic anti-aging agents such as tetrakis-[methylene-3-(3',5'-di-t-butyl-4'-hydroxyphenyl) propionate] methane, and the like. One of these may be used alone, or two or more may be used in combination.

It should be noted that as the anti-aging agent, products available from Seiko Chemical Co., Ltd., Sumitomo Chemical Co., Ltd., Ouchi Shinko Chemical Industrial Co., Ltd., FlexSys Inc., and the like can be used, for example.

The rubber composition of the tread rubber 2A may contain stearic acid. The content of the stearic acid is more than 0.5 parts by mass and less than 10.0 parts by mass with respect to 100 parts by mass of the rubber component, for example. As the stearic acid, conventionally known products can be used, and for example, products such as NOF Corporation, Kao Corporation, Fujifilm Wako Pure Chemical Corporation, Chiba Fatty Acid Co., Ltd., and the like can be used.

The rubber composition of the tread rubber 2A may contain zinc oxide. The content of the zinc oxide is, for example, more than 0.5 parts by mass and less than 10 parts by mass with respect to 100 parts by mass of the rubber component. As the zinc oxide, conventionally known products can be used, for example, products available from Mitsui Mining and Smelting Co., Ltd., Toho Zinc Co., Ltd., Hakusui Tech Co., Ltd., Seido Chemical Industry Co., Ltd., Sakai Chemical Industry Co., Ltd., and the like can be used.

It is preferred that the rubber composition of the tread rubber 2A contains wax. The wax content is, for example, 0.5 to 20 parts by mass, preferably 1.0 to 15 parts by mass, more preferably 1.5 to 10 parts by mass with respect to 100 parts by mass of the rubber component.

The wax is not particularly limited, and examples thereof include petroleum wax such as paraffin wax, microcrystalline wax, and the like; natural wax such as plant wax, animal wax, and the like; synthetic wax such as polymers of ethylene, propylene, and the like. One of these may be used alone, or two or more of these may be used in combination.

It should be noted that as the wax, products available from Ouchi Shinko Chemical Industrial Co., Ltd., Nippon Seiro Co., Ltd., Seiko Chemical Co., Ltd., and so on, for example.

It is preferred that the rubber composition of the tread rubber 2A contains a cross-linking agent such as sulfur. The content of the cross-linking agent is more than 0.1 part by mass and less than 10.0 parts by mass with respect to 100 parts by mass of the rubber component, for example.

Examples of the sulfur include powdered sulfur, precipitated sulfur, colloidal sulfur, insoluble sulfur, highly dispersible sulfur, and soluble sulfur, which are generally used in the rubber industry. One of these may be used alone, or two or more may be used in combination.

It should be noted that, as the sulfur, products available from Tsurumi Chemical Industry Co., Ltd., Karuizawa Sulfur Co., Ltd., Shikoku Chemicals Corporation, FlexSys Inc., Nippon Kanryu Industry Co., Ltd., Hosoi Chemical Industry Co., Ltd., and the like can be used, for example.

Examples of the cross-linking agent other than sulfur include vulcanizing agents containing sulfur atoms such as Tackirol V-200 available from Taoka Chemical Co., Ltd., Duralink HTS (1,6-hexamethylene-sodium dithiosulfate dihydrate) available from FlexSys Inc., KA9188 (1,6-bis (N, N'-dibenzylthiocarbamoyldithio) hexane) available from Lanxess AG, and the like; and organic peroxides such as dicumyl peroxide and the like, for example.

It is preferred that the rubber composition of the tread rubber 2A contains a vulcanization accelerator. The content of the vulcanization accelerator is more than 0.3 parts by mass and less than 10.0 parts by mass with respect to 100 parts by mass of the rubber component, for example.

Examples of the vulcanization accelerator include thiazole-based vulcanization accelerators such as 2-mercaptobenzothiazole, di-2-benzothiazolyl disulfide, N-cyclohexyl-2-benzothiadylsulfenamide, and the like; thiuram-based vulcanization accelerators such as tetramethylthiuram disulfide (TMTD), tetrabenzylthiuram disulfide (TBzTD), tetrakis (2-ethylhexyl) thiuram disulfide (TOT-N), and the like; sulfenamide-based vulcanization accelerators such as N-cyclohexyl-2-benzothiazolesulfenamide, N-t-butyl-2-benzothiazolylsulfenamide, N-oxyethylene-2-benzothiazolesulfenamide, N-oxyethylene-2-benzothiazolesulfenamide, N, N'-diisopropyl-2-benzothiazolesulfenamide, and the like; guanidine-based vulcanization accelerators such as diphenylguanidine, dioltotrilguanidine, orthotrilbiguanidine, and the like. One of these may be used alone, or two or more may be used in combination.

In addition to these components, the rubber composition of the tread rubber 2A may further contain additives commonly used in the tire industry, such as fatty acid metal salts, carboxylic acid metal salts, organic peroxides, and the like, for example. The content of these additives is more than 0.1 part by mass and less than 200 parts by mass with respect to 100 parts by mass of the rubber component, for example.

While detailed description has been made of an especially preferred embodiment of the present invention, the present invention can be embodied in various forms without being limited to the illustrated embodiment.

### [Examples]

Tires of size 175/70R13 having the tire meridian section shown in FIG. 1 were made by way of test according to the specification shown in Table 1 to Table 4. Tire strength, the noise performance, the ride comfort performance, the durability performance, and the fuel efficiency were evaluated by using the test tires. The manufacturing methods and the test methods for each test tire were as follows.

### < Manufacture of Rubber Compositions for Tread Rubber and Rubber Compositions for Belt >

First, a rubber composition for the tread rubber to be used for the tread rubber and a rubber composition for the belt to be used for the tread rubber were manufactured.

### (1) Compounding Materials of Rubber Composition for Tread Rubber

First, each of the compounding materials shown below was prepared.

### (a) Rubber Component

(i) NR: RSS3
(ii) SBR: Modified solution polymerized SBR prepared according to the method described in the following paragraph
   (Styrene content: 30% by mass, vinyl bond amount: 52% by mass, Mw: 250,000)
(iii) UBEPOL-BR150 available from Ube Industries, Ltd.

The SBR described above was prepared according to the procedure described below. First, cyclohexane, tetrahydrofuran, styrene, and 1,3-butadiene were charged into a nitrogen-substituted autoclave reactor. After adjusting the temperature of the contents in the reactor to 20 °C., n-butyllithium was added to initiate polymerization. Polymerization was carried out under adiabatic conditions, and the maximum temperature reached 85 °C. When the polymerization conversion reached 99%, 1,3-butadiene was added and further polymerized for 5 minutes, then N,N-bis(trimethylsilyl)-3-aminopropyltriethoxysilane was added as a denaturant. After the polymerization reaction was completed, 2,6-di-tert-butyl-p-cresol was added. Then, the solvent was removed by steam stripping and dried by a heat roll adjusted to 110 °C. to obtain SBR.

### (b) Compounding Materials other than Rubber Component

(i) Carbon black: Diablack N220 available from Mitsubishi Chemical Corporation
(ii) Silica: Ultrasil VN3 available from Evonik Co. Ltd.
   (BET specific surface area: 165 m²/g)
(iii) Silane coupling agent: Si266 available from Degussa AG
   (Bis (3-triethoxysilylpropyl) disulfide)
(iv) Oil: Process X-140 available from Japan Energy Corporation
(v) Resin (Polymer component): SA85 available from Arizona Chemical Ltd.
   (α-methylstyrene-based resin)
(vi) Wax: Ozoace-0355 available from Nippon Seiro Co., Ltd.
(vii) Anti-aging agent-1: Nocrac 6C available from Ouchi Shinko Chemical Industrial Co., Ltd.
   (N-phenyl-N'-(1,3-dimethylbutyl)-p-phenylenediamine)
(viii) Anti-aging agent-2: Nocrac 224 available from Ouchi Shinko Chemical Industrial Co., Ltd.
   (2,2,4-trimethyl-1,2-dihydroquinoline polymer)
(ix) Zinc oxide: Aenka No. 1 available from Mitsui Mining & Smelting Co., Ltd.
(x) Stearic acid: Stearic acid "Tsubaki" available from Nof Corporation
(xi) Crosslinking agent and Vulcanization accelerator
Sulfur: powdered sulfur available from Tsurumi Chemical Industry Co., Ltd. Vulcanization accelerator-1: Nocceler CZ-G (CBS) available from Ouchi Shinko Chemical Industrial Co., Ltd.

### (N-cyclohexyl-2-benzothiazolyl sulfenamide)

Vulcanization accelerator-2: Nocceler D (DPG) available from Ouchi Shinko Chemical Industrial Co., Ltd.

### (1,3-diphenylguanidine)

### (2) Compounding Materials for rubber composition for belt

First, each of the compounding materials shown below was prepared.

### (a) Rubber Component

NR: RSS3

### (b) Compounding materials other than rubber component

(i) Carbon black-1: Show Black N326 available from Cabot Japan K.K. (N2SA: 78m²/g)
(ii) Carbon black-2: Show Black N550 available from Cabot Japan K.K. (N2SA: 42m²/g)
(iii) Curable resin component-1: PR12686 available from Sumitomo Bakelite Co., Ltd. (Cashew oil-modified phenolic resin)
(iv) Curable resin component-2: Sumikanol 620 available from Taoka Chemical Co., Ltd. (modified resorcin resin)
(v) Curing agent: Sumikanol 507 available from Taoka Chemical Co., Ltd. (methylene donor/ Resin curing agent)
(vi) Cobalt organic acid-1: COST available from DIC Corporation (cobalt content: 9.5% by mass)
(vii) Cobalt organic acid-2: DICNATE NBC-2 available from DIC Corporation (Cobalt boron neodecanoate, cobalt content 22.5% by mass)
(viii) Zinc Oxide: Aenka No. 1 available from Mitsui Mining and Smelting Co., Ltd.
(ix) Anti-aging agent-1: Nocrac 6C available from Ouchi Shinko Chemical Industrial Co., Ltd. (N-Phenyl-N'-(1,3-dimethylbutyl)-p-phenylenediamine)
(x) Anti-aging agent-1: Antage RD available from Kawaguchi Chemical Industry Co., Ltd. (2,2,4-trimethyl-1,2-dihydroquinoline)
(xi) Oil: Process X-140 available from Japan Energy Corporation
(xii) Crosslinking agent, vulcanization accelerator, and cross-linking aid

sulfur: Crystex HSOT20 available from FlexSys Inc. (insoluble sulfur containing 80% by mass of sulfur and 20% by mass of oil)
Vulcanization accelerator: Nocceler DZ available from Ouchi Shinko Chemical Industrial Co., Ltd. (N, N-dicyclohexyl-2-benzothiazolyl sulphenamide)
Crosslinking aid: Duralink HTS available from FlexSys Inc.

### (3) Manufacture of Rubber Compositions

According to each compounding content shown in Table 1 and Table 2, materials other than sulfur and the vulcanization accelerator were kneaded under the condition of 150 °C for 5 minutes by using a Banbury mixer to obtain a kneaded product. It should be noted that each compounding amount is a mass part.

The formulation of the topping rubber is shown in Table 1.

**Table 1**

| Formulation of Tread rubber | | a | b | c | d | e | f |
|---|---|---|---|---|---|---|---|
| (a) Rubber component | | | | | | | |
| | (i) NR | | 35 | 35 | 40 | 35 | 35 |
| | (ii) SBR | 75 | 55 | 55 | 50 | 55 | 55 |
| | (iii) BR | 25 | 10 | 10 | 10 | 10 | 10 |

| (b) Compounding materials other than Rubber component | | | | | | | |
|---|---|---|---|---|---|---|---|
| | (i) Carbon black | 5 | 5 | 5 | 5 | 5 | 5 |
| | (ii) Silica | 75 | 55 | 50 | 55 | 50 | 55 |
| | (iii) Silane coupling agent | 7.5 | 5.5 | 5 | 5.5 | 5 | 5 |
| | (iv) Oil | 8 | 3 | 8 | | | |
| | (v) Resin (polymer component) | 8 | | | | | 6 |
| | (vi) Wax | 1.0 | 1.0 | 1.0 | 1.0 | 1.0 | 1.0 |
| | (vii) Anti-aging agent-1 | 2 | 2 | 2 | 2 | 2 | 2 |
| | (viii) Anti-aging agent-2 | 1 | 1 | 1 | 1 | 1 | 1 |
| | (ix) Zinc Oxide | 2.5 | 2.5 | 2.5 | 2.5 | 2.5 | 2.5 |
| | (x) Stearic acid | 1.2 | 1.2 | 1.2 | 1.2 | 1.2 | 1.2 |
| | (xi) Sulfur | 1.5 | 1.5 | 1.5 | 1.6 | 1.6 | 1.6 |
| | (xi) Vulcanization accelerator-1 | 2 | 2.8 | 2.8 | 2.8 | 2.8 | 2.8 |
| | (xi) Vulcanization accelerator-2 | 2 | 2 | 2 | 2 | 2 | 2 |
| Complex elastic modulus ET* [MPa] | | 10 | 8.8 | 5.5 | 10 | 8.8 | 8.8 |
| Loss tangent tanδ | | 0.2 | 0.12 | 0.12 | 0.12 | 0.08 | 0.14 |

The formulation of the topping rubber is shown in Table 2.

**Table 2**

| Formulation of Topping rubber | | | A | B | C | D | E | F | G | H | I | J | K | L | M | N |
|---|---|---|---|---|---|---|---|---|---|---|---|---|---|---|---|---|
| (a) Rubber component | | | | | | | | | | | | | | | | |
| | NR | | 100 | 100 | 100 | 100 | 100 | 100 | 100 | 100 | 100 | 100 | 100 | 100 | 100 | 100 |

| (b) Compounding materials other than Rubber component | | | | | | | | | | | | | | | | |
|---|---|---|---|---|---|---|---|---|---|---|---|---|---|---|---|---|
| | (i) Carbon black-1 | | 70 | 70 | 65 | 58 | 60 | 55 | | 68 | 55 | 55 | 58 | 58 | 56 | 58 |
| | (ii) Carbon black-2 | | | | | | | | 55 | | | | | | | |
| | (iii) Curable resin component-1 | | | | 3 | 3 | 2 | 4 | | 2 | | | 3 | 3 | 3 | 3 |
| | (iv) Curable resin component-2 | | | | | | | | 5 | | 3 | 5 | | | | |
| | (v) Curing agent | | | | 2.5 | 1.5 | 1.5 | 2 | 2 | 1.5 | 2 | 2 | 1.5 | 1.5 | 1.5 | 1.5 |
| | (vi) Cobalt organic acid-1 | | 1.94 | 1.83 | 1.84 | 1.76 | 1.77 | 1.75 | 1.76 | 1.85 | 1.74 | | 1.81 | 1.64 | 1.29 | |
| | (vii) Cobalt organic acid-2 | | | | | | | | | | | 1.24 | | | | 0.81 |
| | (viii) Zinc Oxide | | 10 | 10 | 10 | 10 | 10 | 10 | 10 | 10 | 10 | 10 | 10 | 10 | 10 | 10 |
| | (ix) Anti-aging agent-1 | | 0.5 | 0.5 | 0.5 | 0.5 | 0.5 | 0.5 | 0.5 | 0.5 | 0.5 | 0.5 | 0.5 | 0.5 | 0.5 | 0.5 |
| | (x) Anti-aging agent-2 | | 1.5 | 1.5 | 1.5 | 1.5 | 1.5 | 1.5 | 1.5 | 1.5 | 1.5 | 1.5 | 1.5 | 1.5 | 1.5 | 1.5 |
| | (xi) Oil | | 2.5 | 2.8 | 0.8 | 0.6 | 0.6 | 1 | 0.6 | 0.5 | 1 | 0.8 | 1 | 0.5 | | 1 |
| | (xii) Sulfur | | 5.5 | 5.5 | 7 | 7 | 7 | 7 | 7 | 7 | 7 | 7 | 7 | 7 | 7 | 7 |
| | (xii) Vulcanization accelerator | | 1 | 1 | 1 | 1 | 1 | 1 | 1.5 | 1.5 | 1 | 1 | 1 | 1 | 1 | 1 |
| | (xii) Crosslinking aid | | | | 1 | 1 | 1 | 1 | 1 | 1 | 1 | 1 | 1 | 1 | 1 | 1 |
| Cobalt concentration | | [ppm] | 955 | 900 | 900 | 900 | 900 | 900 | 900 | 900 | 900 | 1508 | 923 | 839 | 670 | 983 |
| Complex elastic modulus ES* | | [MPa] | 7.5 | 7.5 | 10 | 10 | 8 | 12 | 10 | 10 | 10 | 10 | 10 | 10 | 10 | 10 |
| Loss tangent tanδ | | | 0.16 | 0.16 | 0.08 | 0.08 | 0.08 | 0.08 | 0.05 | 0.12 | 0.08 | 0.08 | 0.08 | 0.08 | 0.08 | 0.08 |

Next, sulfur and a vulcanization accelerator were added to the obtained kneaded product, and the mixture was kneaded under the condition of 80 °C for 5 minutes by using an open roll to obtain a rubber composition for the belt.

### < Tire manufacturing >

The steel wires shown in Table 2 and Table 3 were pulled out and arranged, and the obtained rubber composition for the belt was used to cover the top and bottom of the steel wires so that the total thickness was 0.95 mm. After vulcanization, the belt member was obtained by cutting out so that the steel cords were at 24 degrees with respect to the tire circumferential direction.

Then, the rubber composition for the tread rubber is extruded into the shape of the tread and, together with other tire members, two layers of the belt members were attached to each other so that they crossed each other to form an unvulcanized tire, which was press-vulcanized under the condition of 170°C for 10 minutes to produce a test tire.

### < Tire strength >

The test tires were poked with a protrusion and the energy required to burst the tires was measured. The results are indicated by an index based on Reference 1 being 100, wherein the larger the numerical value, the greater the required energy was, which shows higher tire strength.

Nose was measured while a test vehicle, which was a front-wheel drive small passenger car with the test tires mounted on all wheels, was driven on a road noise measurement road with only a test driver on the test vehicle. The results are indicated by an index based on Reference 1 being 100, wherein the larger the numerical value, the smaller the noise was, which shows better noise performance.

### < Ride Comfort Performance >

The test tires were subjected to vibration on a shaker, and the time from when the vibration was stopped until the vibration was converged was measured. The results are indicated by an index based on Reference 1 being 100, wherein the larger the numerical value, the better the vibration convergence property is, which shows better ride comfort performance.

### < Durability Performance >

The test tires were mounted on a bench durability testing machine, and the running distance until the tire was damaged was measured. The results are indicated by an index based on Reference 1 being 100, wherein the larger the numerical value, the longer the running distance is, which shows better durability performance.

### < Fuel Efficiency >

The test tires were mounted on a rolling resistance tester, and the rolling resistance was measured while the tires were run under load. The results are indicated by an index based on Reference 1 being 100, wherein the larger the numerical value, the smaller the rolling resistance is, which shows better fuel efficiency.

The test results are shown in Table 2 and Table 3.

**Table 3**

| | | Ref.1 | Ref.2 | Ref.3 | Ex.1 | Ex.2 | Ex.3 | Ex.4 | Ex.5 | Ex.6 | Ex.7 | Ex.8 |
|---|---|---|---|---|---|---|---|---|---|---|---|---|
| Formulation of Tread rubber | | a | a | b | b | b | b | b | b | b | b | c |
| Formulation of Topping rubber | | A | B | C | D | E | F | G | H | I | J | D |
| Complex elastic modulus ES* of Topping rubber | [MPa] | 7.5 | 7.5 | 10 | 10 | 8 | 12 | 10 | 10 | 10 | 10 | 10 |
| Loss tangent tanδ of Topping rubber | | 0.16 | 0.16 | 0.16 | 0.08 | 0.08 | 0.08 | 0.05 | 0.12 | 0.08 | 0.08 | 0.08 |
| Ratio (c/L) of Cobalt element concentration (c) [ppm] | | 555 | 555 | 555 | 555 | 555 | 555 | 555 | 555 | 370 | 930 | 555 |
| and cross-sectional outer peripheral length (L) [mm] of Steel single wire | | | | | | | | | | | | |
| Complex elastic modulus ET* of Tread rubber | [MPa] | 10 | 10 | 8.8 | 8.8 | 8.8 | 8.8 | 8.8 | 8.8 | 8.8 | 8.8 | 5.5 |
| Loss tangent tanδ of Tread rubber | | 0.2 | 0.2 | 0.12 | 0.12 | 0.12 | 0.12 | 0.12 | 0.12 | 0.12 | 0.12 | 0.12 |
| Ratio of Long diameter LD/ Short diameter SD of Steel single wire | | 1 | 1.13 | 1.13 | 1.13 | 1.13 | 1.13 | 1.13 | 1.13 | 1.13 | 1.13 | 1.13 |
| Long diameter LD of Steel single wire | [mm] | 0.43 | 0.43 | 0.43 | 0.43 | 0.43 | 0.43 | 0.43 | 0.43 | 0.43 | 0.43 | 0.43 |
| Wave pitch (P) of Steel single wire | [mm] | 5 | 5 | 5 | 5 | 5 | 5 | 5 | 5 | 5 | 5 | 5 |
| Wave height (H) of Steel single wire | [mm] | 0.1 | 0.1 | 0.1 | 0.1 | 0.1 | 0.1 | 0.1 | 0.1 | 0.1 | 0.1 | 0.1 |
| Tire strength | [index] | 100 | 105 | 110 | 112 | 108 | 115 | 114 | 112 | 111 | 117 | 108 |
| Noise performance | [index] | 100 | 95 | 110 | 108 | 113 | 105 | 106 | 110 | 112 | 106 | 115 |
| Ride comfort performance | [index] | 100 | 98 | 109 | 108 | 110 | 111 | 106 | 111 | 111 | 107 | 114 |
| Durability performance | [index] | 100 | 105 | 108 | 113 | 110 | 115 | 120 | 110 | 107 | 114 | 119 |
| Fuel efficiency | [index] | 100 | 93 | 95 | 107 | 109 | 105 | 119 | 105 | 108 | 107 | 110 |

**Table 4**

| | | Ex.9 | Ex. 10 | Ex.11 | Ex.12 | Ex. 13 | Ex.14 | Ex.15 | Ex.16 | Ex.17 | Ex.18 | Ex.19 |
|---|---|---|---|---|---|---|---|---|---|---|---|---|
| Formulation of Tread rubber | | d | e | f | b | b | b | b | b | b | b | b |
| Formulation of Topping rubber | | D | D | D | K | L | M | N | D | D | D | D |
| Complex elastic modulus ES* of Topping rubber | | 10 | 10 | 10 | 10 | 10 | 10 | 10 | 10 | 10 | 10 | 10 |
| | [MPa] | | | | | | | | | | | |
| Loss tangent tanδ of Topping rubber | | 0.08 | 0.08 | 0.08 | 0.08 | 0.08 | 0.08 | 0.08 | 0.08 | 0.08 | 0.08 | 0.08 |
| Ratio (c/L) of Cobalt element concentration (c) [ppm] and cross-sectional peripheral length (L) [mm] of Steel single wire outer | | 555 | 555 | 555 | 555 | 555 | 555 | 555 | 555 | 555 | 555 | 555 |
| Complex elastic modulus ET* of Tread rubber | | 10 | 8.8 | 8.8 | 8.8 | 8.8 | 8.8 | 8.8 | 8.8 | 8.8 | 8.8 | 8.8 |
| | [MPa] | | | | | | | | | | | |
| Loss tangent tanδ of Tread rubber | | 0.12 | 0.08 | 0.14 | 0.12 | 0.12 | 0.12 | 0.12 | 0.12 | 0.12 | 0.12 | 0.12 |
| Ratio of Long diameter LD/ Short diameter SD of Steel single wire | | 1.13 | 1.13 | 1.13 | 1.07 | 1.32 | 1.13 | 1.13 | 1.13 | 1.13 | 1.13 | 1.13 |
| Long diameter LD of Steel single wire | [mm] | 0.43 | 0.43 | 0.43 | 0.43 | 0.43 | 0.32 | 0.47 | 0.43 | 0.43 | 0.43 | 0.43 |
| Wave pitch (P) of Steel single wire | [mm] | 5 | 5 | 5 | 5 | 5 | 5 | 5 | 3.5 | 9 | 5 | 5 |
| Wave height (H) of Steel single wire | [mm] | 0.1 | 0.1 | 0.1 | 0.1 | 0.1 | 0.1 | 0.1 | 0.1 | 0.1 | 0.06 | 0.12 |
| Tire strength | [index] | 116 | 112 | 112 | 117 | 108 | 110 | 115 | 118 | 107 | 115 | 107 |
| Noise performance | [index] | 105 | 107 | 111 | 105 | 113 | 112 | 106 | 105 | 115 | 107 | 111 |
| Ride comfort performanceh | [index] | 105 | 106 | 112 | 105 | 115 | 111 | 105 | 106 | 117 | 105 | 113 |
| Durability performance | [index] | 118 | 118 | 108 | 118 | 110 | 110 | 115 | 119 | 107 | 114 | 110 |
| Fuel efficiency | [index] | 105 | 115 | 105 | 105 | 115 | 105 | 109 | 109 | 108 | 109 | 106 |

From the test results, it was confirmed that the tires in Examples were capable of improving the fuel efficiency while maintaining good noise performance, good ride comfort performance, and good durability performance.

### [ Description of Reference Signs ]

- 1: tire
- 2: tread portion
- 7: belt layer
- 7A, 7B: belt ply
- 9: belt cord
- 9A: steel single wire
- 10: topping rubber

## Claims

1. A tire (1) comprising a belt layer (7) arranged inside a tread portion (2), wherein
the belt layer (7) includes at least one belt ply (7A, 7B),
the belt ply (7A, 7B) includes belt cords (9) made of steel single wires (9A) each having a flat cross-sectional shape, and a topping rubber (10) covering the belt cords (9), wherein the tread portion (2) includes a tread rubber (2A) forming a tread ground contacting surface,
**characterized in that**
the topping rubber (10) has a complex elastic modulus ES* at 70 degrees Celsius in the range of 8.0 to 20.0 MPa and a loss tangent tanδ at 70 degrees Celsius in the range of 0.04 to 0.14, and **in that**
the tread rubber (2A) has a complex elastic modulus ET* at 70 degrees Celsius in the range of 4.5 to 10.0 MPa and a loss tangent tanδ at 70 degrees Celsius in the range of 0.08 to 0.15,
wherein the complex elastic modulus ES*, the complex elastic modulus ET* and loss tangent tanδ are determined in accordance with JIS-K6394 under the conditions of initial strain 10%, amplitude of dynamic strain ±1%, frequency 10Hz and deformation mode tensile.

2. The tire (1) according to claim 1, wherein a ratio (ET*/ES*) of the complex elastic modulus ET* of the tread rubber (2A) to the complex elastic modulus ES* of the topping rubber (10) is 1.3 or less.

3. The tire (1) according to claim 1 or 2, wherein the loss tangent tanδ at 70 degrees Celsius of the topping rubber (10) is in the range of 0.04 to 0.09.

4. The tire (1) according to claim 1 or 2, wherein the loss tangent tanδ at 70 degrees Celsius of the topping rubber (10) is in the range of 0.04 to 0.06.

5. The tire (1) according to any one of claims 1 to 4, wherein each of the steel single wires (9A) has a ratio (LD/SD) in the range of 1.05 to 1.35 between a long diameter LD and a short diameter SD of the cross-sectional shape thereof and the long diameter LD in the range of 0.30 to 0.50 mm.

6. The tire (1) according to any one of claims 1 to 5, wherein
each of the steel single wires (9A) is formed wavy in at least one of a long diameter direction and a short diameter direction of the cross-sectional shape thereof,
each of the steel single wires (9A) has a wave pitch (P) in the range of 3.0 to 10.0 mm, and
each of the steel single wires (9A) has a wave height (H) in the range of 0.05 to 0.15 mm.

7. The tire (1) according to any one of claims 1 to 6, wherein
the topping rubber (10) contains a cobalt element, and
a ratio (c/L) between a concentration (c) (ppm) of the cobalt element and an outer peripheral length (L) (mm) of each of the steel single wires in the cross-sectional shape thereof is in the range of 350 to 1000 ppm/mm.

## Patentansprüche

1. Reifen (1) mit einer Gürtelschicht (7), die innerhalb eines Laufflächenabschnitts (2) angeordnet ist, wobei
die Gürtelschicht (7) mindestens eine Gürteleinlage (7A, 7B) enthält,
die Gürteleinlage (7A, 7B) Gürtelfäden (9), die aus einzelnen Stahldrähten (9A) hergestellt sind, die jeweils eine flache Querschnittsform aufweisen, und einen Deckkautschuk (10), der die Gürtelkorde (9) bedeckt, enthält, wobei der Laufflächenabschnitt (2) einen Laufflächenkautschuk (2A) enthält, der eine Laufflächen-Bodenkontaktfläche bildet,
**dadurch gekennzeichnet, dass**
der Deckkautschuk (10) einen komplexen Elastizitätsmodul ES* bei 70 Grad Celsius im Bereich von 8,0 bis 20,0 MPa und einen Verlusttangens tanδ bei 70 Grad Celsius im Bereich von 0,04 bis 0,14 aufweist, und dadurch, dass
der Laufflächenkautschuk (2A) einen komplexen Elastizitätsmodul ET* bei 70 Grad Celsius im Bereich von 4,5 bis 10,0 MPa und einen Verlusttangens tanδ bei 70 Grad Celsius im Bereich von 0,08 bis 0,15 aufweist,
wobei der komplexe Elastizitätsmodul ES*, der komplexe Elastizitätsmodul ET* und der Verlusttangens tanδ in Übereinstimmung mit JIS-K6394 unter den Bedingungen einer Anfangsdehnung von 10 %, einer Amplitude der dynamischen Dehnung von ±1 %, einer Frequenz von 10 Hz und eines Verformungsmodus Zug ("tensile") bestimmt sind.

2. Reifen (1) nach Anspruch 1, wobei ein Verhältnis (ET*/ES*) des komplexen Elastizitätsmoduls ET* des Laufflächenkautschuks (2A) zu dem komplexen Elastizitätsmodul ES* des Deckkautschuks (10) 1,3 oder weniger beträgt.

3. Reifen (1) nach Anspruch 1 oder 2, wobei der Verlusttangens tanδ bei 70 Grad Celsius des Deckkautschuks (10) im Bereich von 0,04 bis 0,09 liegt.

4. Reifen (1) nach Anspruch 1 oder 2, wobei der Verlusttangens tanδ bei 70 Grad Celsius des Deckkautschuks (10) im Bereich von 0,04 bis 0,06 liegt.

5. Reifen (1) nach einem der Ansprüche 1 bis 4, wobei jeder der einzelnen Stahldrähte (9A) ein Verhältnis (LD/SD) im Bereich von 1,05 bis 1,35 zwischen einem langen Durchmesser LD und einem kurzen Durchmesser SD dessen Querschnittsform aufweist und der lange Durchmesser LD im Bereich von 0,30 bis 0,50 mm liegt.

6. Reifen (1) nach einem der Ansprüche 1 bis 5, wobei
jeder der einzelnen Stahldrähte (9A) in mindestens einem ausgewählt aus einer Richtung des langen Durchmessers und einer Richtung des kurzen Durchmessers der Querschnittsform wellenförmig ausgebildet ist,
jeder der einzelnen Stahldrähte (9A) eine Wellenteilung bzw. einen Wellenabstand (P) im Bereich von 3,0 bis 10,0 mm aufweist, und
jeder der einzelnen Stahldrähte (9A) eine Wellenhöhe (H) im Bereich von 0,05 bis 0,15 mm aufweist.

7. Reifen (1) nach einem der Ansprüche 1 bis 6, wobei
der Deckkautschuk (10) ein Kobaltelement enthält, und
ein Verhältnis (c/L) zwischen einer Konzentration (c) (ppm) des Kobaltelements und einer äußeren Umfangslänge (L) (mm) jedes der einzelnen Stahldrähte in dessen Querschnittsform im Bereich von 350 bis 1000 ppm/mm liegt.

## Revendications

1. Pneu (1) comprenant une couche ceinture (7) agencée à l'intérieur d'une partie bande de roulement (2), dans lequel
la couche ceinture (7) inclut au moins un pli de ceinture (7A, 7B),
le pli de ceinture (7A, 7B) inclut des câbles de ceinture (9) faits de monofils d'acier (9A) ayant chacun une forme de section transversale plate, et un caoutchouc de recouvrement (10) couvrant les câbles de ceinture (9), dans lequel la partie bande de roulement (2) inclut un caoutchouc de bande de roulement (2A) formant une surface, de la bande de roulement, entrant en contact avec le sol, **caractérisé en ce que**
le caoutchouc de recouvrement (10) a un module d'élasticité complexe ES* à 70 degrés Celsius dans la plage de 8,0 à 20,0 MPa et une tangente de perte tanδ à 70 degrés Celsius dans la plage de 0,04 à 0,14,
et **en ce que** le caoutchouc de bande de roulement (2A) a un module d'élasticité complexe ET* à 70 degrés Celsius dans la plage de 4,5 à 10,0 MPa et une tangente de perte tanδ à 70 degrés Celsius dans la plage de 0,08 à 0,15,
dans lequel le module d'élasticité complexe ES*, le module d'élasticité complexe ET* et la tangente de perte tanδ sont déterminés conformément à JIS-K6394 dans les conditions d'effort initial de 10 %, d'amplitude d'effort dynamique de ±1 %, de fréquence de 10 Hz et de tension en mode de déformation.

2. Pneu (1) selon la revendication 1, dans lequel un rapport (ET*/ES*) du module d'élasticité complexe ET* du caoutchouc de bande de roulement (2A) par rapport au module d'élasticité complexe ES* du caoutchouc de recouvrement (10) est de 1,3 ou moins.

3. Pneu (1) selon la revendication 1 ou 2, dans lequel la tangente de perte tanδ à 70 degrés Celsius du caoutchouc de recouvrement (10) est dans la plage de 0,04 à 0,09.

4. Pneu (1) selon la revendication 1 ou 2, dans lequel la tangente de perte tanδ à 70 degrés Celsius du caoutchouc de recouvrement (10) est dans la plage de 0,04 à 0,06.

5. Pneu (1) selon l'une quelconque des revendications 1 à 4, dans lequel chacun des monofils d'acier (9A) a un rapport (LD/SD) dans la plage de 1,05 à 1,35 entre un long diamètre LD et un court diamètre SD de la forme de section transversale de celui-ci et le long diamètre LD dans la plage de 0,30 à 0,50 mm.

6. Pneu (1) selon l'une quelconque des revendications 1 à 5, dans lequel chacun des monofils d'acier (9A) est formé de façon ondulée dans au moins une d'une direction de long diamètre et d'une direction de court diamètre de la forme de section transversale de celui-ci,
chacun des monofils d'acier (9A) a un pas d'onde (P) dans la plage de 3,0 à 10,0 mm, et
chacun des monofils d'acier (9A) a une hauteur d'onde (H) dans la plage de 0,05 à 0,15 mm.

7. Pneu (1) selon l'une quelconque des revendications 1 à 6, dans lequel le caoutchouc de recouvrement (10) contient un élément cobalt, et
un rapport (c/L) entre une concentration (c) (ppm) de l'élément cobalt et une longueur périphérique extérieure (L) (mm) de chacun des monofils d'acier dans la forme de section transversale de celui-ci est dans la plage de 350 à 1000 ppm/mm.
